# FASCICULE DE BREVET EUROPEEN

(11) **EP 2 145 399 B1**
(45) Date de publication et mention de la délivrance du brevet: **18.07.2012**
(21) Numéro de dépôt: 08719421.3
(22) Date de dépôt: 02.04.2008
(51) Int. Cl.: H04M 1/725, H04B 5/02, H04B 5/00

(54) **MODULE NFC, NOTAMMENT POUR TELEPHONE MOBILE**
NFC-MODUL INSBESONDERE FÜR EIN MOBILTELEFON
NFC MODULE, PARTICULARLY FOR MOBILE TELEPHONE

(30) Priorité: 04.04.2007 FR 0702459
(43) Date de publication de la demande: 20.01.2010
(73) Titulaire: Kowalski, Jacek, 13090 Aix en Provence (FR)
(72) Inventeur: Kowalski, Jacek, 13090 Aix en Provence (FR)
(74) Mandataire: Marchand, André
(86) Numéro de dépôt international: PCT/IB2008/000823
(87) Numéro de publication internationale: WO 2008/122869

(56) Documents cités:
- EP-A- 1 521 206
- WO-A-02/01497
- WO-A-03/052672
- WO-A-03/060820
- WO-A-2005/091997
- WO-A1-2005/008575
- FR-A- 2 787 221
- JP-A- 2003 346 117

## Description

La présente invention concerne la technologie NFC (Near Field Communication). La technologie NFC utilise des composants comprenant une interface de communication fonctionnant par couplage inductif et présentant au moins deux modes de fonctionnement, notamment un mode "lecteur" (Reader Mode) et un mode "émulation de carte". Dans le mode lecteur, ou mode actif, un composant NFC fonctionne comme un lecteur RFID (Radio Frequency Identification) conventionnel pour accéder en lecture ou écriture à un circuit intégré sans contact ("contactless") monté dans une carte à puce ou dans une étiquette électronique. Le composant NFC émet un champ magnétique, envoie des données par modulation du champ magnétique et reçoit des données par rétromodulation (modulation de charge). Dans le mode émulation le composant NFC fonctionne à la manière d'un transpondeur pour dialoguer avec un lecteur RFID ou un autre composant NFC dans le mode actif, et être vu par le lecteur ou l'autre composant NFC comme un circuit intégré sans contact RFID. Ainsi, le composant NFC dans le mode émulation de carte n'émet pas de champ magnétique, reçoit des données en démodulant un champ magnétique émis par l'autre lecteur et émet des données par rétromodulation. En sus de ces modes de fonctionnement, un composant NFC peut mettre en oeuvre plusieurs protocoles de communication sans contact par exemple ISO 14443-A, ISO 14443-B et Felica.

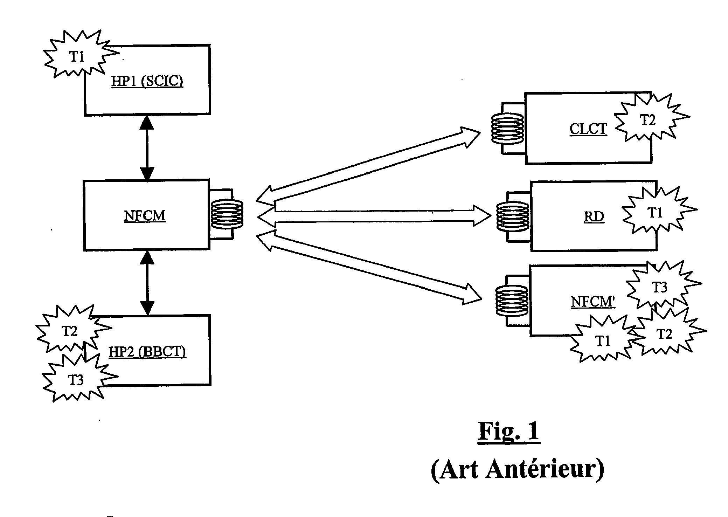

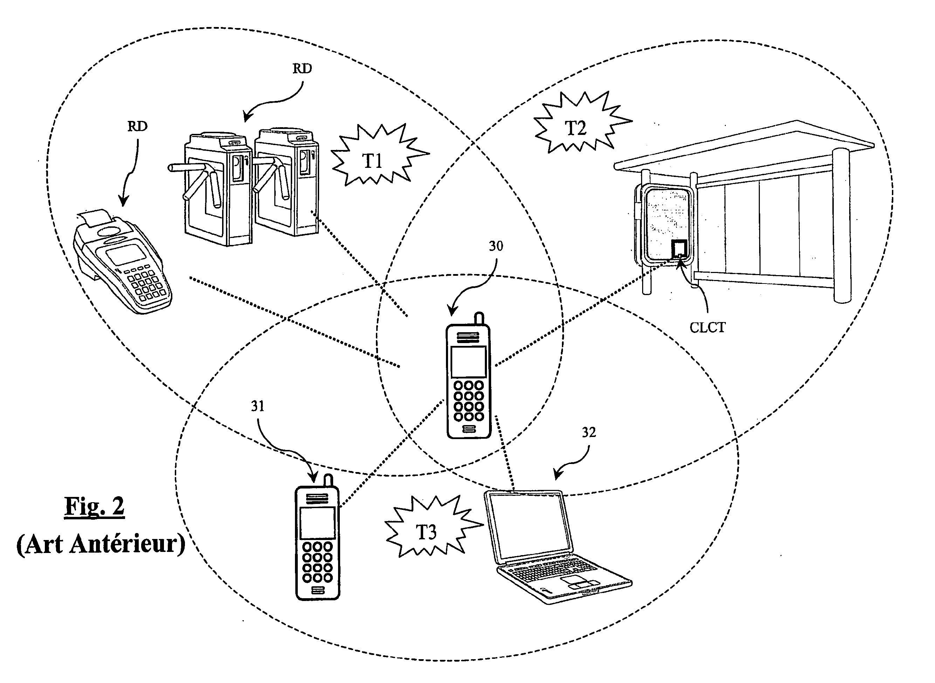

La figure 1 représente un chipset (ensemble de circuits intégrés) réalisé autour d'un composant NFC désigné "NFCM" et intégré dans un téléphone mobile 15. Le composant NFC est connecté à des processeurs hôtes HP1, HP2. Le processeur HP1 est par exemple un circuit intégré sécurisé de type SIM ("Suscriber Identity Module") adapté aux applications sans contact, et le processeur HP2 est par exemple un processeur non sécurisé comme le circuit de bande de base du téléphone mobile. Les ressources du composant NFC et notamment son interface de communication sont utilisées par les processeurs HP1, HP2 pour gérer des applications sans contact. Des exemples d'applications de type T1, T2 ou T3 sont illustrés sur la figure 2.Dans les applications de type T1, le composant NFC du téléphone 15 est dans le mode émulation pour être lu par un lecteur RD conventionnel ou par un autre composant NFCM' dans le mode actif (Fig. 1). Il s'agit généralement d'applications au paiement ou au contrôle d'accès payant (machine de paiement, entrée de métro, etc.). Le téléphone mobile 15 est alors utilisé comme une carte à puce. Dans les applications de type T2, le composant NFC est dans le mode lecteur pour lire ou écrire un circuit intégré sans contact CIC, par exemple une carte de visite électronique ou une étiquette publicitaire, ou pour lire ou écrire un composant NFCM' se trouvant dans le mode émulation de carte. Le téléphone mobile est dans ce cas utilisé comme un lecteur de carte. Dans les applications de type T3, le composant NFC du téléphone 15 dialogue avec un composant NFCM' embarqué dans un téléphone mobile 15', dans un ordinateur ou tout autre dispositif. Le mode de fonctionnement du composant NFC peut être passif ou actif.

Les applications de type T2 et T3 sont généralement gérées par le processeur non sécurisé HP2 tandis que les applications de type T1 sont le plus souvent gérées par le processeur sécurisé HP1, comme illustré sur la figure 1, car l'accès au service nécessite une identification sécurisée de l'abonné incluant une phase d'authentification mettant en jeu un circuit de cryptographie. Des applications de type T1 gratuites et non sécurisées peuvent toutefois être gérées par le processeur HP2, par exemple la lecture de données de type "contacts" (adresses et numéros de téléphone) dans le téléphone, etc. Inversement des applications de type T2 pourraient être gérées par le processeur sécurisé HP1 si la lecture de données dans un circuit intégré sans contact externe est soumise à des conditions d'abonnement ou de prépaiement.

Ainsi, la technologie NFC permet a un téléphone mobile (ou autre dispositif portable) de communiquer en utilisant la technologie sans contact, et lui permet d'avoir deux principales fonctionnalités :
- de se comporter comme un lecteur sans contact (composant NFC dans le mode actif) pour lire des cartes, des étiquettes électroniques ou des données dans d'autres téléphones mobiles
- de se comporter comme une carte sans contact (mode émulation) pour être lu par des lecteurs de carte ou d'autres téléphones mobiles.

Le marché qui motive le plus l'intégration de la technologie NFC dans un téléphone mobile est le marché du paiement. Ainsi, certaines banques commencent à déployer des cartes bancaires sans contact pour effectuer des achats avec l'objectif de remplacer les cartes à contact conventionnelles. Egalement, les opérateurs de transport sont intéressés par le remplacement des cartes sans contact par des téléphones mobiles incluant une fonction NFC, afin de réduire les coûts des systèmes par la réduction d'achat des cartes et la possibilité d'ajouter de nouveaux services grâce à la possibilité de se connecter à un système via le téléphone mobile. Par ailleurs, cette fonction de connectivité sans contact du téléphone peut être intéressante pour de nombreuses applications afin d'offrir des services mais également pour des raisons de sécurité afin de pouvoir effectuer des transactions de paiement on-line et de pouvoir charger des logiciels dans le téléphone.

Le fait que le téléphone mobile puisse se comporter comme un lecteur permet d'envisager d'autres types d'applications liées à l'identification électronique. On peut ainsi "coller" une étiquette électronique sans contact à un objet puis utiliser le téléphone pour lire ou écrire des données dans le circuit intégré sans contact de l'étiquette. Ces applications ne nécessitent généralement pas de sécurité car elles ne sont pas liées au paiement. Ces applications sont par exemple la lecture/écriture d'une étiquette électronique attachée a un livre dans la bibliothèque pour y stocker les commentaires, le stockage et la consultation de la prescription de prise d'un médicament, le stockage et la lecture de données sur une carte électronique de visite, la lecture de données dans un circuit intégré sans contact fixé sur une affiche publicitaire, pour accéder aux informations ou acheter des services, etc.

Toutefois, le déploiement des applications NFC se heurte à de nombreuses contraintes. Notamment l'intégration de composants NFC dans des téléphones mobiles nécessite de modifier substantiellement les cartes mères des téléphones mobiles, ce qui implique des investissements industriels conséquents. D'autre part, un consensus industriel doit être trouvé concernant l'interface de communication entre le processeur hôte sécurisé HP1 et le composant NFC et la façon de stocker et gérer l'application sécurisée. A cet effet divers protocoles ont été proposés comme le protocole S2C et le protocole SWP (projet de norme ISO/IEC JTC 1 N8018). Par ailleurs, l'intégration d'un circuit intégré sans contact sécurisé dans un chipset NFC nécessite de prévoir un circuit intégré différent de ceux qui existent déjà dans le domaine du paiement sans contact. Ainsi, la production de circuits intégrés sans contact doit être scindée entre des circuits intégrés destinés à être connectés à un composant NFC (via une interface SWP par exemple) et des circuits intégrés destinés à recevoir une bobine d'antenne pour fonctionner de façon autonome, ce qui augmente les coûts de production. Or, la multiplication des modèles de circuits intégrés sécurisés entraîne une complexification du processus de qualification bancaire. En effet, toute modification apportée à un circuit intégré sécurisé, implique que le circuit intégré sans contact repasse le processus de qualification.

Enfin, en raison de son coût, la technologie NFC sera intégrée dans différents modèles de téléphones mobiles lorsque la demande du marché sera suffisante. Cependant, pour créer une telle demande, il faut que des applications NFC aient été développées. Or, de telles applications ne seront développées que si la fonctionnalité NFC est intégrée dans la plupart des téléphones mobiles commercialisés. Ainsi, on se trouve confronté à un cercle vicieux : les applications NFC ne se développent pas car il y a peu de téléphones NFC et il n'y a peu de téléphones NFC car il y a peu d'applications NFC. Le marché des composants NFC est ainsi amené à se développer lentement, alors que la technologie est arrivée à maturité. Ainsi, on estime que les téléphones mobiles équipés de fonctionnalités NFC ne représenteront pas plus de 2 % de tous les téléphones mobiles sur le marché en 2010.

La présente invention vise à promouvoir le développement des applications NFC en contournant les problèmes industriels évoqués ci-dessus.

La présente invention se base sur le postulat qu'un composant NFC ne doit pas être considéré comme un coeur de chipset auquel se rattachent divers processeurs hôtes, comme cela est le cas dans l'architecture standard représentée en figure 1, sur laquelle les efforts de l'industrie se sont focalisés, mais comme un simple moyen intermédiaire pour le transfert de données d'un point à un autre.

Un mode de réalisation de l'invention se fonde sur l'idée simple mais non moins inventive de réaliser un module fonctionnel en réunissant sur un même support un lecteur NFC et un circuit intégré sans contact passif. Le circuit intégré sans contact et le lecteur NFC sont équipés chacun d'une bobine d'antenne et les deux bobines d'antenne sont couplées. Une communication peut donc être établie entre ces composants mais chaque composant peut également être utilisé indépendamment de l'autre.

Dans l'art antérieur, un lecteur NFC est certes destiné à communiquer avec un circuit intégré sans contact mais ces deux composants ne sont pas conçus pour être rassemblés sur un même support. Généralement, le circuit intégré sans contact est agencé sur un premier support dont il assure l'identification ou l'authentification tandis que le lecteur NFC est intégré dans un dispositif distinct pour assurer la lecture du circuit intégré sans contact. Le lecteur NFC et le circuit intégré sans contact sont mis en présence occasionnellement, lors d'une transaction ou d'une identification, mais ne sont pas réunis de façon permanente sur un même support. Le fait de réunir ces deux composants sur un même support fait naître un objet fonctionnel ayant des caractéristiques avantageuses. Ainsi, le circuit intégré sans contact passif peut être utilisé indépendamment du lecteur NFC, pour des applications de paiement par exemple. Un circuit intégré sans contact déjà certifié est donc apte à être incorporé dans le module fonctionnel sans nécessiter une nouvelle certification puisque son intégration dans le module fonctionnel ne nécessite pas de modifier son interface de communication. Le circuit intégré sans contact peut également être lu par le lecteur NFC et les données qui y sont lues peuvent être transférées dans un dispositif maître comme un téléphone mobile ou dispositif similaire. Par ailleurs, le lecteur NFC peut lui-même lire des circuits intégrés sans contact autres que celui qui est intégré dans le module fonctionnel, ou être lu par un lecteur externe (s'il possède le mode émulation de carte).

Un mode de réalisation de l'invention se fonde sur l'idée d'intégrer dans le module fonctionnel un circuit de liaison très répandu se trouvant dans la majorité des téléphones actuels, comme un circuit d'interface Bluetooth^{®}. On réalise alors un module fonctionnel qui peut communiquer avec un téléphone mobile ne possédant pas la fonctionnalité NFC. Une fois que le module fonctionnel est associé au téléphone en tant que périphérique Bluetooth^{®}, le téléphone profite de la fonctionnalité NFC du module via la liaison Bluetooth^{®}. La mise en oeuvre d'applications NFC peut donc être envisagée sans nécessiter la refonte de la carte mère du téléphone et nécessite seulement le chargement de logiciels d'application dans le téléphone. Le module fonctionnel permet ainsi d'offrir des applications NFC aux utilisateurs de téléphones conventionnels. Il peut être simplement fixé sur la coque externe du téléphone ou conservé à coté de celui-ci.

Un autre mode de réalisation de l'invention se fonde sur l'idée d'intégrer le module fonctionnel dans un téléphone mobile dont le boîtier est alors utilisé comme support du lecteur NFC et du circuit intégré sans contact passif, tout en conservant le couplage de la bobine d'antenne du lecteur et du circuit intégré comme moyen de communication entre le lecteur NFC et le circuit intégré sans contact. Ce dernier peut être monté dans le téléphone de façon amovible, par exemple au moyen d'une fente d'introduction. Le lecteur NFC peut également être monté dans le téléphone de façon amovible, par exemple au moyen d'une autre fente d'introduction, ou être intégré sur la carte mère du téléphone.

Encore un autre mode de réalisation de l'invention se fonde sur l'idée de prévoir une bobine d'antenne supplémentaire dans le module fonctionnel. La bobine d'antenne supplémentaire est couplée à la bobine d'antenne du circuit intégré sans contact. La bobine d'antenne supplémentaire permet d'augmenter la distance de communication du circuit intégré sans contact avec un dispositif externe, ou de coupler la bobine d'antenne du lecteur NFC avec la bobine d'antenne du circuit intégré sans contact, ou encore d'augmenter le taux de couplage entre la bobine d'antenne du lecteur NFC et celle du circuit intégré sans contact.

Plus particulièrement, la présente invention prévoit un procédé de stockage et d'échange de données sans contact, comprenant une étape consistant à réaliser un module fonctionnel formant un support de données apte à émettre ou recevoir des données par couplage inductif, l'étape de réalisation du module fonctionnel comprenant les étapes consistant à réunir sur un support portable commun au moins un circuit intégré sans contact passif alimenté électriquement par couplage inductif sous la forme d'une première puce de semi-conducteur, et un lecteur de circuit intégré sans contact sous la forme d'une seconde puce de semi-conducteur; connecter le circuit intégré à une première bobine d'antenne, connecter le lecteur à une seconde bobine d'antenne, pour que le lecteur puisse émettre un champ magnétique; et coupler la bobine d'antenne du circuit intégré et la bobine d'antenne du lecteur, de manière que le lecteur et le circuit intégré puissent échanger des données.

Selon un mode de réalisation, le procédé comprend une étape consistant à prévoir au moins une bobine d'antenne supplémentaire pour assurer au moins l'une des fonctions suivantes : augmenter la distance de communication du circuit intégré sans contact, coupler la bobine d'antenne du circuit intégré sans contact et la bobine d'antenne du lecteur, augmenter le taux de couplage entre la bobine d'antenne du circuit intégré sans contact et la bobine d'antenne du lecteur.

Selon un mode de réalisation, le procédé comprend les étapes consistant à : prévoir dans le module fonctionnel un circuit de liaison connecté au lecteur, et échanger des données entre le lecteur et un dispositif maître au moyen du circuit de liaison.

Selon un mode de réalisation, le procédé comprend une étape consistant à configurer le lecteur pour qu'il exécute les commandes suivantes envoyées par un dispositif maître : une commande de lecture ou d'écriture du circuit intégré sans contact, une commande de lecture ou d'écriture d'un dispositif externe au module fonctionnel, une commande de transfert au dispositif maître de données fournies par le circuit intégré sans contact, et une commande de transfert au dispositif maître de données fournies par le dispositif externe.

Selon un mode de réalisation, le dispositif maître est choisi parmi le groupe d'appareils comprenant les téléphones mobiles, les PDA, les consoles de jeu, les lecteurs audio ou vidéo portables et les ordinateurs personnels.

Selon un mode de réalisation, le procédé comprend une étape consistant à prévoir comme circuit de liaison un circuit d'interface Bluetooth^{®}.

Selon un mode de réalisation, le procédé comprend une étape consistant à prévoir comme circuit de liaison un connecteur à contact.

Selon un mode de réalisation, le procédé comprend une étape consistant à monter le lecteur sur ou dans le support portable au moyen d'un support intermédiaire.

Selon un mode de réalisation, le procédé comprend une étape consistant à monter le circuit intégré sans contact sur ou dans le support portable au moyen d'un support intermédiaire.

Selon un mode de réalisation, le procédé comprend une étape consistant à intégrer le module fonctionnel dans un écouteur d'oreille de téléphone mobile et à relier le lecteur à un processeur de l'écouteur d'oreille, pour retransmettre via le processeur des fichiers reçus par couplage inductif par le lecteur ou par le circuit intégré sans contact.

Selon un mode de réalisation, le procédé comprend une étape consistant à prévoir dans le module fonctionnel une source d'alimentation électrique du le lecteur comprenant une pile électrique ou un condensateur chargé électriquement par un circuit de téléalimentation.

Selon un mode de réalisation, le procédé comprend une étape consistant à utiliser comme lecteur un composant NFC comprenant un mode de fonctionnement lecteur et un mode de fonctionnement dans lequel le composant NFC émule le fonctionnement d'un circuit intégré sans contact et peut dialoguer avec un autre lecteur.

Selon un mode de réalisation, le circuit intégré sans contact est un circuit sécurisé comprenant un circuit de cryptographie pour réaliser des transactions sécurisées comprenant une étape d'authentification du circuit intégré sans contact.

Selon un mode de réalisation, le procédé comprend les étapes consistant à : écrire des données dans le circuit intégré sans contact, par couplage inductif, au moyen d'un dispositif externe, lire les données écrites dans le circuit intégré sans contact au moyen du lecteur, et transférer dans un dispositif maître, via le circuit de liaison, les données lues dans le circuit intégré sans contact au moyen du lecteur.

Selon un mode de réalisation, le procédé comprend les étapes consistant à : écrire des données dans le lecteur, via le circuit de liaison, écrire les données dans le circuit intégré sans contact, par couplage inductif, au moyen du lecteur, et lire les données écrites dans le circuit intégré sans contact au moyen d'un dispositif externe, et mémoriser les données dans le dispositif externe.

Selon un mode de réalisation, le procédé comprend les étapes consistant à : intégrer le module fonctionnel dans un dispositif portable formant un accessoire périphérique de téléphone mobile, le dispositif portable incluant un processeur et le circuit de liaison ; au moyen du lecteur, lire par couplage inductif un fichier audio ou vidéo, et transférer le fichier audio ou vidéo au processeur du dispositif portable.

Selon un mode de réalisation, le fichier audio ou vidéo est lu dans le circuit intégré sans contact.

Selon un mode de réalisation, le procédé comprend une étape de chargement dans le circuit intégré sans contact du fichier audio ou vidéo, par couplage inductif et au moyen d'un dispositif externe.

Selon un mode de réalisation, le dispositif externe est un lecteur de circuit intégré sans contact ou un composant NFC.

Selon un mode de réalisation, le procédé comprend le dispositif externe est un lecteur de circuit intégré sans contact, le lecteur du module fonctionnel étant placé dans un mode émulation de circuit intégré sans contact pour recevoir les données du dispositif externe.

Selon un mode de réalisation, l'invention se rapporte également à un système de stockage et d'échange de données comprenant un module fonctionnel formant un support de données apte à émettre ou recevoir des données par couplage inductif. Le module fonctionnel comprend : un support portable commun sur lequel ou dans lequel sont réunis au moins un circuit intégré sans contact passif alimenté électriquement par couplage inductif sous la forme d'une première puce de semi-conducteur, et un lecteur de circuit intégré sans contact sous la forme d'une seconde puce de semi-conducteur ; une première bobine d'antenne connectée au circuit intégré ; une seconde bobine d'antenne connectée au lecteur, pour que le lecteur puisse émettre un champ magnétique ; la première bobine d'antenne étant couplée à la seconde bobine d'antenne du lecteur de manière que le lecteur et le circuit intégré puissent échanger des données.

Selon un mode de réalisation, le module fonctionnel comprend une bobine d'antenne supplémentaire assurant au moins l'une des fonctions suivantes : augmenter la distance de communication du circuit intégré sans contact, coupler la bobine d'antenne du circuit intégré sans contact et la bobine d'antenne du lecteur, augmenter le taux de couplage entre la bobine d'antenne du circuit intégré sans contact et la bobine d'antenne du lecteur.

Selon un mode de réalisation, le système comprend un circuit de liaison connecté au lecteur, et un dispositif maître pour échanger des données avec le lecteur, via le circuit de liaison.

Selon un mode de réalisation, le lecteur est configuré pour exécuter les commandes suivantes envoyées par le dispositif maître : une commande de lecture ou d'écriture du circuit intégré sans contact ; une commande de lecture ou d'écriture d'un dispositif externe ; une commande de transfert au dispositif maître de données fournies par le circuit intégré sans contact, et une commande de transfert au dispositif maître de données fournies par le dispositif externe.

Selon un mode de réalisation, le dispositif maître est choisi parmi le groupe d'appareils comprenant les téléphones mobiles, les PDA, les consoles de jeu, les lecteurs audio ou vidéo portables et les ordinateurs personnels.

Selon un mode de réalisation, le circuit de liaison comprend un circuit d'interface Bluetooth^{®}.

Selon un mode de réalisation, le circuit de liaison comprend un connecteur à contact.

Selon un mode de réalisation, le lecteur est monté sur ou dans le support portable au moyen d'un support intermédiaire.

Selon un mode de réalisation, le circuit intégré sans contact est monté sur ou dans le support portable au moyen d'un support intermédiaire.

Selon un mode de réalisation, le module fonctionnel est intégré dans un écouteur d'oreille de téléphone mobile, le lecteur étant relié à un processeur de l'écouteur d'oreille, de manière à pouvoir retransmettre via le processeur des fichiers reçus par couplage inductif par le lecteur ou par le circuit intégré sans contact.

Selon un mode de réalisation, le module fonctionnel comprend une source d'alimentation électrique du lecteur comportant une pile électrique ou un condensateur chargé électriquement par un circuit de téléalimentation.

Selon un mode de réalisation, le lecteur est un composant NFC comprenant un mode de fonctionnement dans lequel le composant NFC émule le fonctionnement d'un circuit intégré sans contact et peut dialoguer avec un autre lecteur.

Selon un mode de réalisation, le circuit intégré sans contact est un circuit sécurisé comprenant un circuit de cryptographie pour réaliser des transactions sécurisées comprenant une étape d'authentification du circuit intégré sans contact.

Des exemples de réalisation de l'invention sont exposés dans ce qui suit, à titre non limitatif, en référence aux figures jointes parmi lesquelles :
- la figure 1 précédemment décrite représente un chipset NFC classique et des dispositifs externes susceptibles de communiquer avec le chipset,
- la figure 2 illustre des exemples d'applications NFC,
- la figure 3 représente un module sans contact classique,
- la figure 4 est le schéma électrique du module de la figure 4,
- les figures 5 et 6 sont des schémas électriques de deux variantes de réalisation d'un module fonctionnel selon l'invention,
- la figure 7 représente un module fonctionnel selon l'invention apposé sur un téléphone mobile,
- la figure 8 représente une architecture classique de circuit intégré sans contact,
- la figure 9 représente un exemple d'architecture d'un composant NFC présent dans le module fonctionnel selon l'invention,
- les figures 10A, 10B sont des vues respectivement de dessus et en coupe d'un exemple de réalisation d'un module fonctionnel selon l'invention,
- la figure 11 est une vue de dessus d'un autre exemple de réalisation d'un module fonctionnel selon l'invention,
- la figure 12 est une vue de dessus d'un autre exemple de réalisation d'un module fonctionnel selon l'invention,
- la figure 13 est une vue de dessus d'un autre exemple de réalisation d'un module fonctionnel selon l'invention,
- la figure 14 est une vue de dessus d'un autre exemple de réalisation d'un module fonctionnel selon l'invention,
- la figure 15 est une vue de dessus d'un autre exemple de réalisation d'un module fonctionnel selon l'invention,
- la figure 16 est une vue de dessus d'un autre exemple de réalisation d'un module fonctionnel selon l'invention,
- la figure 17 est une vue de dessus d'un autre exemple de réalisation d'un module fonctionnel selon l'invention,
- la figure 18 est une vue de dessus d'un autre exemple de réalisation d'un module fonctionnel selon l'invention,
- la figure 19 est une vue de dessus d'un autre exemple de réalisation d'un module fonctionnel selon l'invention,
- les figures 20A, 20B sont des vues de dessus d'un autre exemple de réalisation d'un module fonctionnel selon l'invention,
- les figures 21A, 21B, 21C sont des vues de dessus d'un autre exemple de réalisation d'un module fonctionnel selon l'invention, représenté respectivement sous forme éclatée, partiellement assemblée et assemblée,
- la figure 22 est une vue de dessus d'un autre exemple de réalisation d'un module fonctionnel selon l'invention,
- la figure 23 est une vue de dessus d'un autre exemple de réalisation d'un module fonctionnel selon l'invention,
- la figure 24 est une vue de dessus d'un autre exemple de réalisation d'un module fonctionnel selon l'invention,
- la figure 25 est une vue de dessus d'un autre exemple de réalisation d'un module fonctionnel selon l'invention,
- les figures 26A, 26B, 27A, 27B, 28A, 28B, 29A et 29B illustrent des exemples d'utilisation d'un module fonctionnel selon l'invention.

### Exemple de module sans contact classique

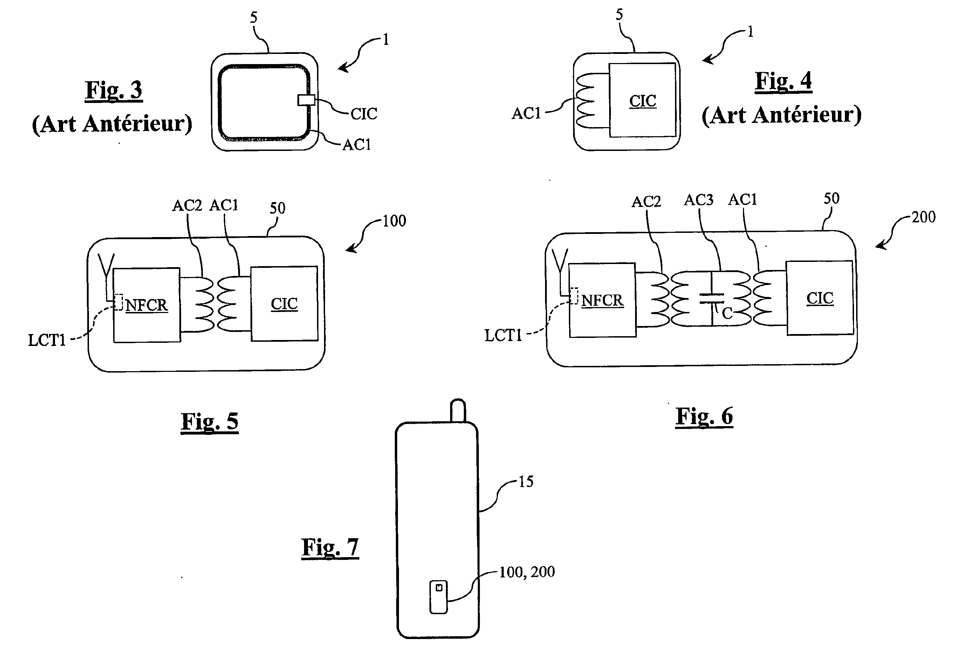

La figure 3 représente un module sans contact 1 classique comprenant un circuit intégré sans contact CIC connecté à une bobine d'antenne AC1, l'ensemble étant agencé sur un support 5 ou enchâssé ("embedded") dans le support 5. Selon les dimensions du support, le module 1 peut former une carte à puce sans contact, une étiquette sans contact ("tag") ou tout autre objet portatif électronique sans contact. La figure 4 est le schéma électrique du module 1. Le circuit intégré sans contact CIC est représenté sous la forme d'un bloc et la bobine d'antenne AC1 sous forme de bobine électrique schématique.

### Schémas électriques de modules fonctionnels selon l'invention

Le schéma électrique d'un mode de réalisation d'un module fonctionnel 100 selon l'invention est représenté sur la figure 5. Le module 100 comprend un circuit intégré sans contact CIC et un composant NFCR rassemblés sur un support commun 50. Le circuit intégré sans contact CIC est connecté à une bobine d'antenne AC1 et le composant NFCR est connecté à une bobine d'antenne AC2. Le circuit intégré sans contact CIC et le composant NFCR prennent chacun la forme d'une puce de semi-conducteur. Les bobines d'antenne AC1 et AC2 sont conformées et agencées de telle manière qu'elles sont couplées l'une à l'autre. Ainsi, le composant NFCR peut échanger des données avec le circuit intégré sans contact CIC. Le circuit intégré CIC est de préférence de type passif et ne nécessite aucune autre source d'alimentation électrique qu'un champ magnétique. L'alimentation électrique du composant NFCR est assurée par une source d'alimentation qui peut comprendre un accumulateur (pile électrique) monté sur ou enchâssé dans le support 50, ou tout autre type de circuit d'alimentation connu. Il peut s'agir notamment d'un circuit de téléalimentation assurant l'extraction d'une tension d'alimentation à partir d'un champ magnétique ou électrique environnant, ou encore un condensateur qui est chargé par téléalimentation et stocke une quantité d'électricité suffisante pour alimenter électriquement le composant NFCR pendant des périodes d'utilisation de ce dernier.

Dans un mode de réalisation, le module fonctionnel 100 comprend un circuit de liaison LCT1 non filaire ("wireless"), afin de communiquer avec un dispositif maître (non représenté) et recevoir notamment des commandes (de lecture, d'écriture, de mode de fonctionnement, de configuration, etc.). Le circuit de liaison LCT1 est par exemple un circuit d'interface Bluetooth^{®} pouvant être intégré dans le composant NFCR. Ce circuit d'interface permet d'établir une liaison de données entre le composant NFCR et un dispositif comportant un circuit de liaison similaire, par exemple un téléphone Bluetooth^{®}.

Le schéma électrique d'un autre mode de réalisation d'un module fonctionnel 200 selon l'invention est représenté sur la figure 6. Le module 200 se distingue du module 100 en ce qu'il comporte une bobine d'antenne supplémentaire AC3 qui n'est connectée ni au composant NFCR ni au circuit intégré sans contact CIC. La bobine d'antenne AC3 est couplée à la bobine d'antenne AC1 du circuit CIC et est prévue pour l'une des raisons suivantes au moins :
i) augmenter la distance de communication du circuit intégré sans contact,
ii) faire apparaître un couplage entre les bobines d'antenne AC1 et AC2,
iii) augmenter le taux de couplage entre les bobines d'antenne AC1 et AC2 si celles-ci sont agencées de manière a être couplées en l'absence de la bobine d'antenne AC3.

Dans les cas ii) et iii) la bobine d'antenne AC3 est également couplée à la bobine AC2 du composant NFCR. La bobine d'antenne AC3 peut être accordée au moyen d'un condensateur C sur la fréquence de travail Fc des bobines d'antenne AC1 et AC2, par exemple 13,56 MHz (fréquence la plus couramment utilisée dans les applications RFID et préconisée par les normes IS014442 et ISO 15693).

### Exemple d'architecture de circuit intégré sans contact

La figure 7 représente le module 100, 200 fixé sur le boîtier d'un téléphone mobile 15, par exemple sur la face arrière du téléphone. Le module 100, 200 peut par exemple être fixé sur le téléphone au moyen d'un matériau adhésif. Le module 100, 200 peut communiquer avec le téléphone au moyen du circuit de liaison LCT1, par exemple une liaison Bluetooth^{®}, en tant que dispositif esclave. Le module 100, 200 ainsi relié au téléphone mobile peut permettre de mettre en oeuvre de nombreuses applications NFC que l'industrie cherche aujourd'hui à mettre en oeuvre en utilisant une architecture de chipset NFC sur carte mère de téléphone telle que représentée en figure 1. L'avantage qu'offre le module 100, 200 par rapport à un tel chipset est de pouvoir être réalisé à moindre coût et proposé au grand public de façon quasi-immédiate, sans attendre que les questions techniques ou les questions de normalisation relatives à la réalisation des chipsets NFC soient réglées.

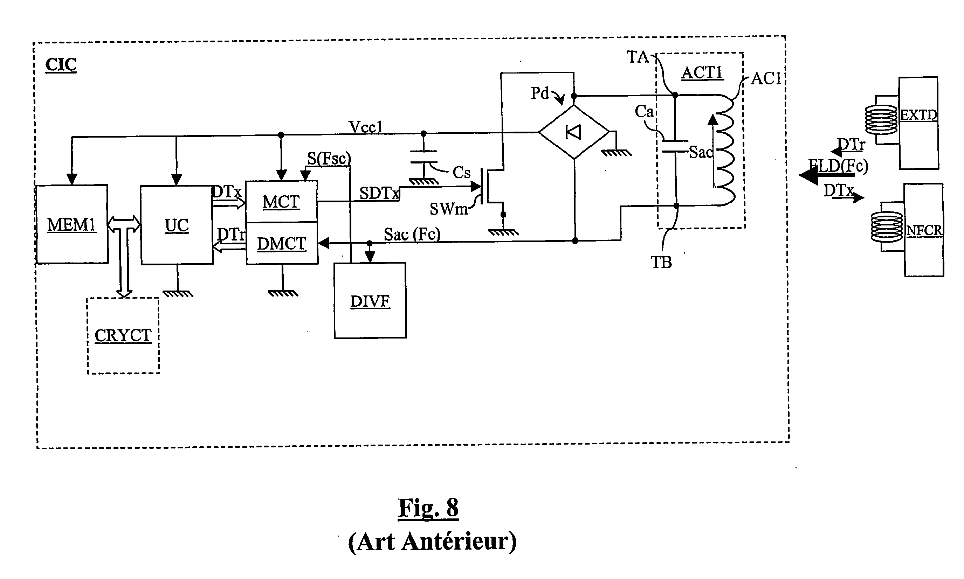

La figure 8 est un exemple d'architecture classique d'un circuit intégré sans contact passif pouvant être utilisé en tant que circuit CIC dans le module fonctionnel 100, 200. L'architecture représentée n'est qu'un exemple parmi diverses architectures connues de circuits intégrés sans contact. Le circuit intégré CIC comprend un circuit d'antenne ACT1, un interrupteur de rétromodulation SWm, par exemple un transistor interrupteur, un circuit de modulation MCT, un circuit de démodulation DMCT, une unité centrale UC (séquenceur à logique câblée ou microprocesseur) et une mémoire MEM1 (plan mémoire).

Le circuit d'antenne comprend la bobine d'antenne AC1 et une capacité d'accord Ca en parallèle, pour accorder le circuit d'antenne au voisinage de la fréquence de travail Fc. La capacité Ca est généralement intégrée sur le substrat semi-conducteur et la bobine d'antenne AC1 est connectée à des bornes TA, TB du circuit intégré. Le circuit intégré est prévu pour fonctionner en présence d'un champ magnétique FLD de fréquence Fc. Ici, ce champ magnétique peut être émis par un dispositif externe EXTD ou par le composant NFCR présent dans le module 100, 200. En présence du champ magnétique, un signal d'antenne alternatif Sac de fréquence Fc apparaît dans le circuit d'antenne.

La mémoire MEM1 peut comprendre des zones mémoire non volatile, par exemple de type Flash ou EEPROM, et des zones mémoire volatiles, par exemple de type RAM. Elle reçoit un ou plusieurs programmes application et permet également de stocker des données d'application. L'unité centrale UC fournit des données sortantes DTx au circuit MCT qui applique à une borne de contrôle de l'interrupteur SWm, par exemple la grille du transistor MOS, un signal SDTx porteur de données DTx. L'interrupteur SWm est connecté aux bornes d'antenne TA, TB et sa fermeture (état passant) provoque l'apparition, dans le circuit d'antenne, d'un signal de rétromodulation (signal de modulation de charge) au rythme du signal SDTx. Optionnellement le signal SDTx peut être modulé par un signal de sous-porteuse Fsc oscillant à une fréquence Fsc inférieure à la fréquence de travail Fc, fourni par un diviseur de fréquence DIVF recevant le signal d'antenne Sac. Le circuit intégré CIC comprend également une diode ou un pont de diodes Pd assurant le redressement du signal d'antenne Sac et la fourniture d'une tension d'alimentation Vcc1. Le pont de diodes Pd est connecté aux bornes d'antenne TA, TB. Sa sortie est connectée à un condensateur de lissage Cs et fournit la tension Vcc1.

Dans un mode de réalisation, le circuit intégré CIC est un composant sécurisé et comprend également un circuit de cryptographie CRYCT relié à l'unité centrale UC et à la mémoire MEM1 par l'intermédiaire d'un bus de données et d'adresse. Le circuit CRYCT transforme des mots aléatoires en mots cryptés, en réponse à une demande d'authentification émise par un dispositif externe EXTD ou par le composant NFCR.

### Exemple d'architecture de composant NFCR

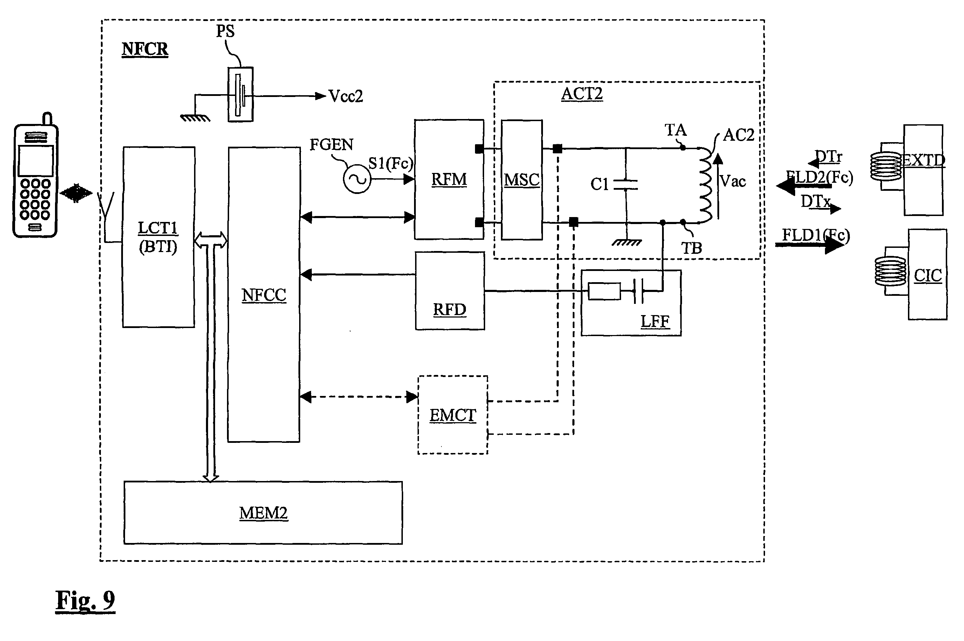

La figure 9 représente un exemple d'architecture d'un composant NFCR pouvant être utilisée dans le module fonctionnel 100, 200. Le composant représenté ici est réalisé à partir d'une plate-forme de lecteur RFID classique et comprend optionnellement un circuit d'émulation EMCT pour fonctionner dans le mode émulation de carte.

Le composant NFCR comprend un circuit d'antenne ACT2, une source d'alimentation électrique PS fournissant une tension Vcc2, un générateur FGEN incluant un oscillateur, un circuit de modulation RFM, un circuit de démodulation RFD, un contrôleur NFCC (microprocesseur ou microcontrôleur), une mémoire MEM2 (plan mémoire comprenant des zones mémoire non volatiles et volatiles) et le circuit de liaison LCT1 ici un circuit d'interface Bluetooth^{®} (BTI). Comme indiqué plus haut, le circuit, d'alimentation PS peut être ou peut comprendre i) une pile électrique, ii) un circuit de téléalimentation prévu pour extraire la tension Vcc2 d'un champ magnétique ou électrique environnant, ou iii) un condensateur qui est chargé par téléalimentation, ou une combinaison de ces moyens d'alimentation.

Le circuit d'antenne ACT2 comprend la bobine d'antenne AC2, connectée à des bornes d'antenne TA, TB de la puce de semi-conducteur, et un condensateur C1 en parallèle pour accorder le circuit d'antenne sur la fréquence de travail Fc. Le circuit d'antenne peut également comprendre divers autres composants d'accord ainsi que des composants de filtrage EMI (filtrage des radiations électromagnétiques) représentés sous la forme d'un bloc MSC.

Le générateur FGEN fournit un signal S1(Fc) d'excitation du circuit d'antenne ACT2. Le modulateur RFM reçoit du contrôleur NFCC des données à émettre DTx et applique le signal d'excitation S1(Fc) au circuit d'antenne ACT2 en le modulant en fonction des données à émettre. Le signal d'excitation fait apparaître une tension alternative Vac aux bornes de la bobine d'antenne et un champ magnétique FLD1(Fc) est émis. L'amplitude de la tension Vac est modulée par le circuit RFM en fonction des données à émettre. Par ailleurs le circuit démodulateur RFD est relié au circuit d'antenne ACT2 pour recevoir la tension d'antenne Vac par l'intermédiaire d'un filtre passe-bas LFF qui supprime la porteuse Fc. Le circuit RFD reçoit ainsi un signal de rétromodulation dont il extrait des données DTr. Les données DTr peuvent être émises par le circuit CIC du module fonctionnel ou un circuit intégré sans contact externe au module fonctionnel. Il peut s'agir également de données émises par un composant NFC externe fonctionnant dans le mode émulation de carte.

Dans le mode émulation de carte, le composant NFCR n'émet pas le champ magnétique FLD1 et reçoit un champ magnétique externe FLD2(Fc) émis par un dispositif externe EXTD qui peut être un composant NFC dans le mode actif ou un lecteur RFID. Le circuit d'émulation EMCT assure l'émission et la réception de données et est connecté au contrôleur NFCC et aux bornes du circuit d'antenne. Pour émettre ou recevoir des données, le circuit d'émulation EMCT fonctionne à la manière des circuits MCT, DMCT du circuit intégré sans contact CIC de la figure 8 (le générateur FGEN étant inactif ou hors tension). Les données sortantes sont émises par rétromodulation et les données entrantes véhiculées par le champ magnétique FLD2 sont extraites de celui-ci par décodage d'un signal de modulation d'enveloppe.

Le circuit EMCT peut toutefois être considéré comme optionnel et ne pas être intégré dans le composant NFCR si les applications visées ne nécessitent pas le mode émulation de carte. Dans ce cas, le composant NFCR au sens de l'invention est un simple lecteur RFID n'offrant pas le mode émulation de carte.

### Exemples de réalisation de modules fonctionnels selon l'invention sur un support de type carte

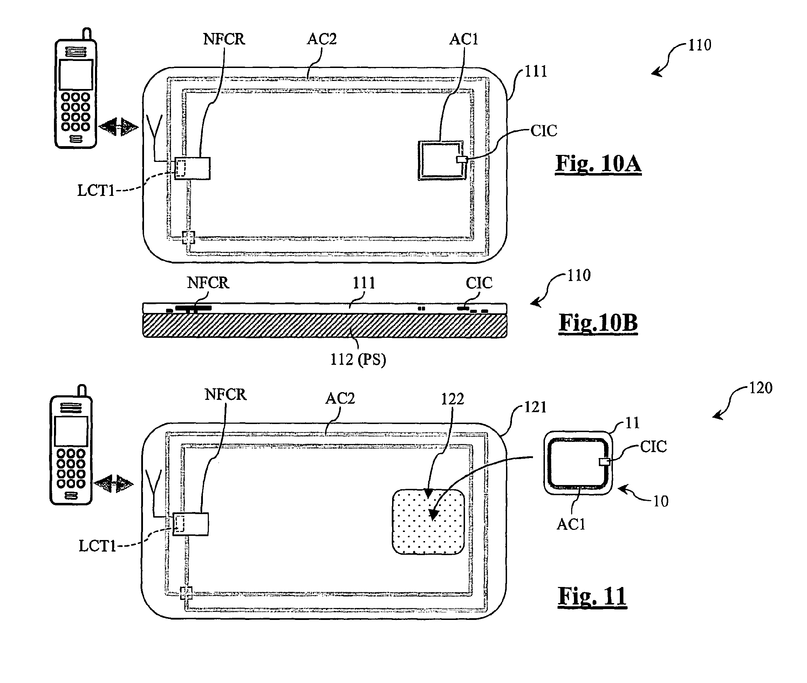

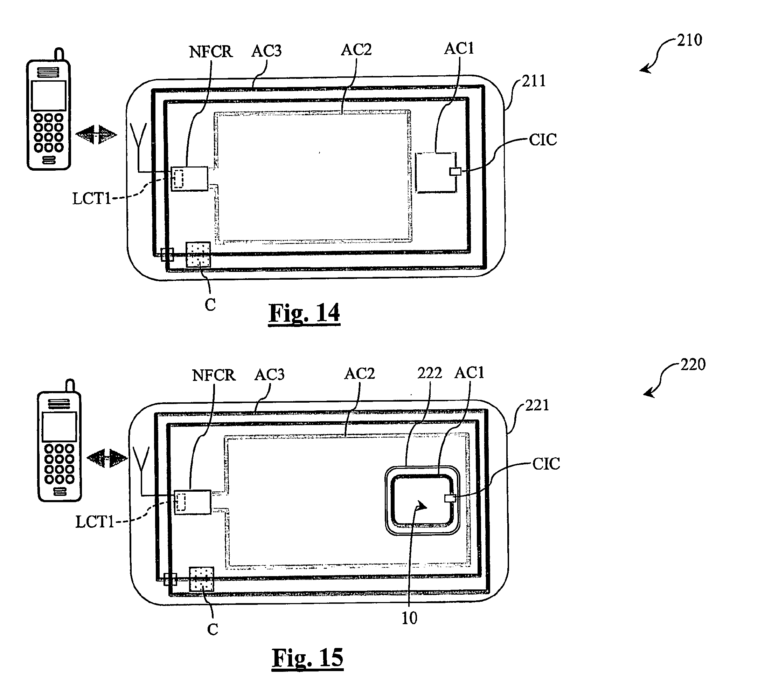

Les figures 10A à 13 représentent des exemples de réalisation de modules fonctionnels 110, 120, 130, 140 dont le schéma électrique est conforme à celui de la figure 5. Les figures 14 à 20B représentent des exemples de réalisation de modules fonctionnels 210, 220, 230, 240, 250, 260, 270 dont le schéma électrique est conforme à celui de la figure 6. Ces figures ne donnent qu'un aperçu de toutes les possibilités d'implémentation qu'offre la présente invention. Les variantes représentées concernent principalement la forme et l'implantation des antennes AC1, AC2, AC3 et l'agencement du composant NFCR et du circuit CIC.

Sur ces diverses figures, les modules fonctionnels sont réalisés sur un support de type carte, respectivement 111, 121, 131, 141, 211, 221, 231, 241, 2511, 261, 271, et sont vus de dessus (hormis sur la figure 10B qui est une vue en coupe du module de la figure 10A). Le support de type carte peut être réalisé avec tout matériau connu utilisé dans l'art antérieur pour réaliser des cartes à puce ou des étiquettes électroniques, notamment matière plastique, film plastique autocollant, papier, carton, bois, etc. Les bobines d'antenne AC1, AC2, AC3 peuvent elles-mêmes être réalisées suivant diverses techniques connues, notamment par dépôt d'un matériau métallique, par découpe d'un matériau métallique, par dépôt d'encre conductrice, etc.

Le composant NFCR, le circuit intégré sans contact CIC et les bobines d'antenne AC1, AC2, AC3 peuvent être montés à la surface du support de type carte ou être enchâssés dans celui-ci. Ces éléments sont représentés ici comme visibles dans un souci de lisibilité des figures, en supposant que le support de type carte est transparent s'ils y sont enchâssés.

Il est supposé ici que le composant NFCR est équipé d'un circuit de liaison LCT1 Bluetooth^{®}. L'antenne UHF nécessaire à la liaison Bluetooth^{®} est représentée schématiquement sous la forme d'une antenne dipolaire UHF et peut être réalisée de diverses manières connues, par exemple au moyen d'une section de piste conductrice ou d'un fil conducteur déposé ou enchâssé dans le support de type carte.

Le nombre d'enroulements que présente chacune des bobines d'antenne AC1, AC2 peut être variable. Il dépend en pratique du cahier des charges (distance de communication souhaitée, taux de couplage, puissance d'émission du champ magnétique, etc.) et des performances de la circuiterie analogique embarquée dans le composant NFCM et dans le circuit intégré CIC. Ainsi, sur les figures, le nombre d'enroulements représenté (un ou deux enroulements) n'est pas spécifiquement lié au mode de réalisation représenté et peut avoir été choisi dans le seul but d'améliorer la lisibilité des figures. Dans des zones d'intersection du fil ou de la piste formant une bobine d'antenne, un coussinet isolant ("pad") peut être prévu pour éviter les courts-circuits.

### Figures 10A à 13

Sur la figure 10A, la bobine d'antenne AC2 du composant NFCR parcourt la périphérie du support 111 du module 110 et entoure entièrement le circuit CIC et sa bobine d'antenne AC1. La figure 10B montre le module 110 en coupe selon un axe longitudinal central. On voit que les composants NFCR, CIC et les bobines d'antenne AC1, AC2 sont enchâssés dans le support 111. La figure 10B montre également un boîtier 112 en forme de carte qui est accolée à la face arrière du support 111 et qui présente deux bornes de connexion reliées au composant NFCR, pour alimenter électriquement celui-ci. Ce boîtier forme la source d'alimentation du composant NFCR et peut comprendre une pile électrique rechargeable (au moyen d'un chargeur séparé), un circuit de téléalimentation (circuit redresseur de champ magnétique ou électrique), un condensateur chargé par un circuit de téléalimentation, ou une combinaison de ces moyens d'alimentation. Dans un mode de réalisation le circuit de téléalimentation pourrait comprendre sa propre bobine d'antenne ou utiliser une bobine d'antenne du module fonctionnel pour extraire de l'énergie électrique. Egalement, bien que représenté ici dans un boîtier séparé du module fonctionnel, le circuit d'alimentation pourrait être intégré dans le support du module.

Le module 120 représenté sur la figure 11 diffère du module 110 en ce que le circuit intégré sans contact CIC est monté dans un micromodule 10 indépendant. Le micromodule 10 comprend un support 11 qui reçoit le circuit intégré CIC et la bobine d'antenne AC1. Le micromodule 10 est de même type que le module classique représenté sur la figure 3. Le support de type carte 121 du module 120 comporte un logement 122 pour recevoir le micromodule 10, par exemple une cavité de même forme que le micromodule 10. Une couche adhésive peut être prévue à l'arrière du micromodule 10 pour le fixer dans le logement 122. Une fois le micromodule 10 monté dans le logement, le module 120 est d'un aspect sensiblement identique au module 110, la bobine d'antenne AC2 étant de même forme et entourant le micromodule 10. Le logement recevant le micromodule 10 pourrait également être une cavité borgne pourvue d'une fente d'insertion (logement à fente).

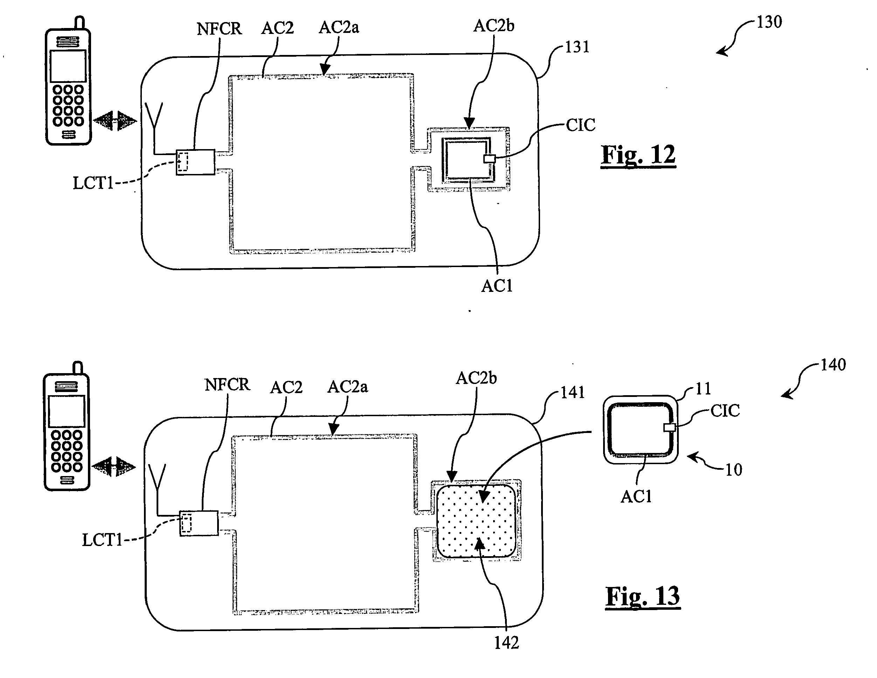

Le module 130 représenté sur la figure 12 se distingue du module 110 de la figure 10A par la forme de la bobine d'antenne AC2, le support 131 étant de même forme que le support 111, l'agencement des composants NFCR et CIC étant identique ainsi que la forme de la bobine d'antenne AC1. La bobine d'antenne AC2 présente deux boucles AC2a, AC2b en série coplanaires. La boucle AC2a s'étend sur une partie du support 131 et n'entoure pas la bobine d'antenne AC1, tandis que la boucle AC2b entoure la bobine AC1 et présente un diamètre proche de celle-ci pour augmenter le taux de couplage entre les bobines AC1, AC2.

Le module 140 représenté sur la figure 13 présente une bobine d'antenne AC2 à deux boucles similaire à celle du module 130. Un micromodule 10 similaire à celui représenté sur la figure 11 est utilisé. Le micromodule 11 comprend comme précédemment le circuit intégré CIC et la bobine d'antenne AC1 montés sur ou enchâssés dans un support indépendant 11. Le support 141 comporte un logement ouvert 142 recevant le micromodule 10. La boucle AC2b longe la bordure du logement 142 et entoure la bobine d'antenne AC2.

### Figures 14 à 19

Sur les figures 14 à 19, les modules 210, 220, 230, 240, 250, 260 sont équipés de la bobine d'antenne AC3. Le condensateur C servant à accorder la bobine d'antenne AC3 sur la fréquence de travail Fc est par exemple un sandwich conducteur/diélectrique comprenant des coussinets conducteurs ("pads") séparés par une couche diélectrique.

Sur la figure 14, la bobine d'antenne AC3 du module 210 parcourt la périphérie du support 211 et entoure les bobines d'antenne AC1, AC2. La bobine d'antenne AC1 n'entoure pas la bobine d'antenne AC2. La bobine d'antenne AC3 assure le couplage des bobines AC1, AC2 et augmente également la distance de communication du circuit intégré CIC.

Les module 220 représenté sur la figure 15 se distingue du module 210 en ce que le circuit intégré sans contact CIC et la bobine d'antenne AC1 sont montés sur ou sont enchâssés dans le micromodule 10 décrit plus haut, qui est agencé dans un logement 222 prévu dans le support 221 du module.

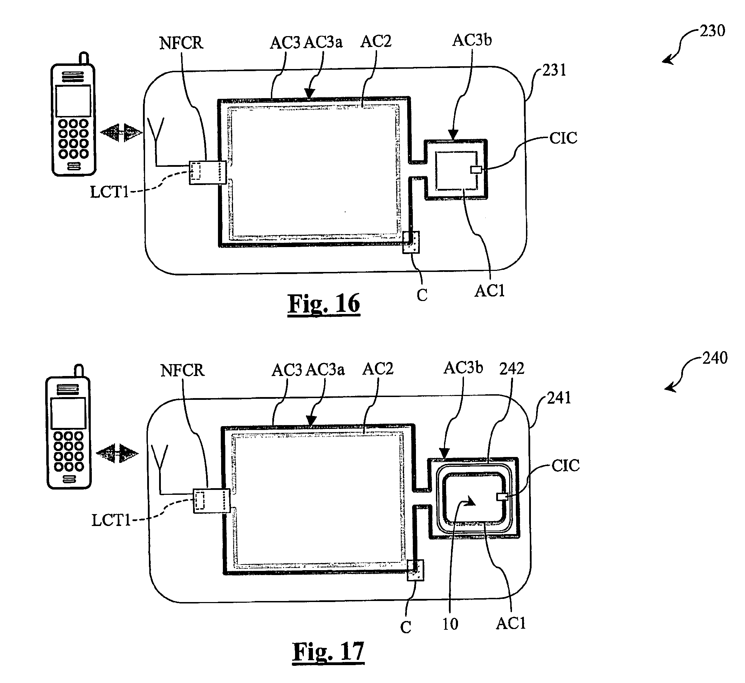

Le module 230 représenté sur la figure 16 se distingue du module 210 représenté sur la figure 14 en ce que la bobine d'antenne AC3 comprend deux boucles AC3a, AC3b. La boucle AC3a entoure étroitement la bobine d'antenne AC2 et la boucle AC3a entoure étroitement la bobine AC1. La bobine d'antenne AC3 permet à la fois d'augmenter la distance de communication du circuit intégré sans contact CIC grâce à son couplage avec la bobine d'antenne AC1 et d'augmenter le taux de couplage entre les bobines AC1 et AC2.

Le module 240 sur la figure 17 se distingue du module 230 de la figure 16 en ce que le circuit intégré sans contact CIC et la bobine d'antenne AC1 sont montés sur ou sont enchâssés dans le micromodule 10. Le micromodule est agencé dans un logement 242 prévu dans le support 241. La boucle AC3b parcourt les bords du logement 242.

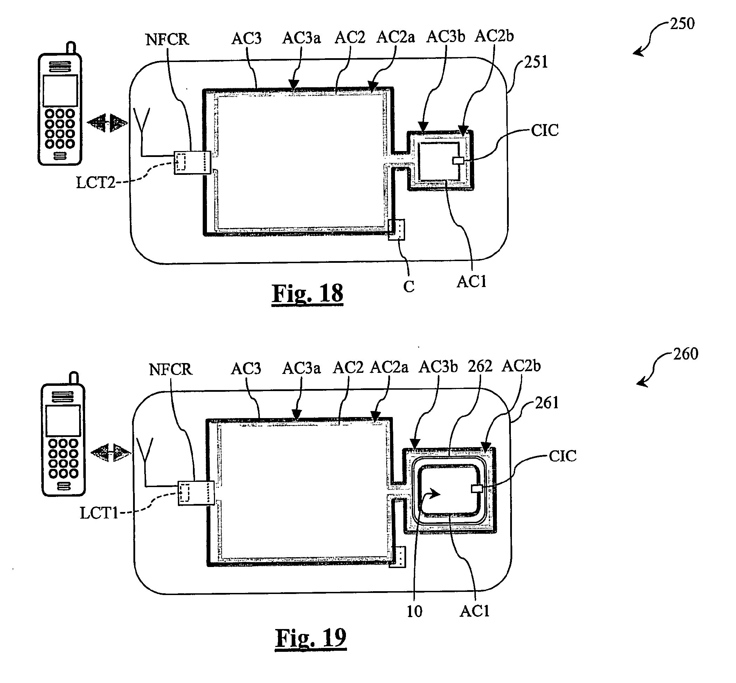

Les modules 250, 260 représentés sur les figures 18, 19 se distinguent respectivement des modules 230, 240 représentés sur les figures 16, 17 en ce que la bobine d'antenne AC2 comprend deux boucles en série coplanaires AC2a, AC2b. La boucle AC3a entoure la boucle AC2a et la boucle AC3b entoure la boucle AC2b qui entoure elle-même la bobine d'antenne AC1. Un fort taux de couplage est ainsi créé entre les bobines AC1, AC2. Par ailleurs, le module 260 se distingue du module 250 en ce que le circuit intégré sans contact CIC et la bobine d'antenne AC1 sont montés sur ou dans le micromodule 10, qui est agencé dans un logement 262 prévu dans le support 261.

### Figures 20A, 20B

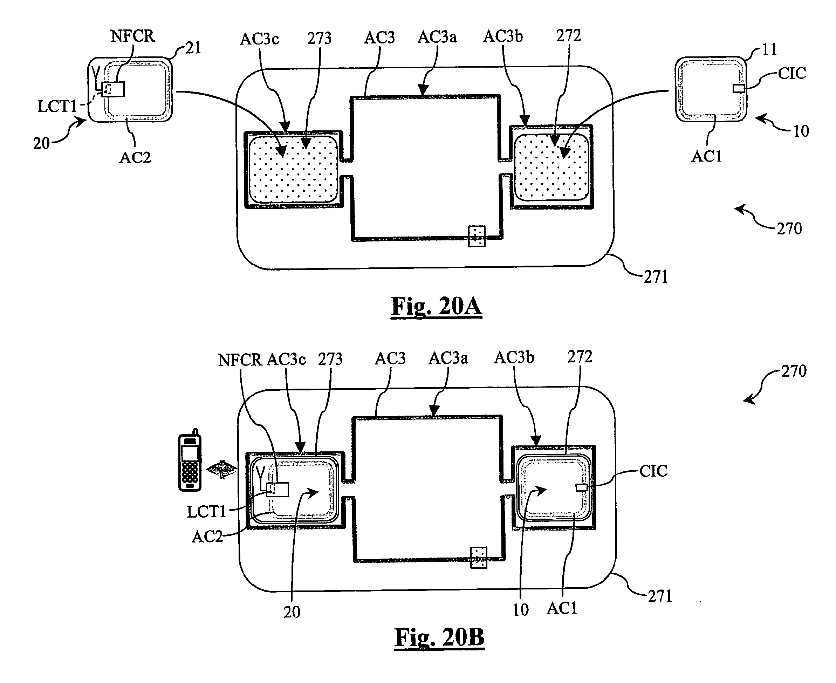

Le module 270 représenté sur les figures 20A, 20B comprend un support de type carte 271 dans lequel sont prévus deux logements 272, 273. Le logement 272 reçoit le micromodule 10 déjà décrit, qui comprend le circuit intégré sans contact CIC et la bobine d'antenne AC1 agencés sur ou enchâssés dans le support indépendant 11. Le logement 273 reçoit un micromodule 20 comprenant le composant NFCR et la bobine d'antenne AC2 agencés sur ou enchâssés dans un support indépendant 21. Les bobines d'antenne AC1 et AC2 étant dans ce cas disjointes et non coaxiales, le couplage entre ces deux bobines est assuré par la bobine d'antenne AC3 qui présente au moins deux boucles en série coplanaires entourant respectivement la bobine d'antenne AC1 et la bobine d'antenne AC2. Ici, la bobine d'antenne AC3 présente trois boucles coplanaires en série AC3a, AC3b, AC3c. La boucle AC3a s'étend sur le support 271 entre les deux micromodules 10, 20, la boucle AC3b longe les bords du logement 272 et entoure la bobine d'antenne AC1. La boucle AC3c longe les bords du logement 273 et entoure la bobine d'antenne AC2.

Sur la figure 20A les micromodules 10, 20 sont représentés avant leur montage sur le support 270 et sur la figure 20B les micromodules ont été placés dans les logements 272, 273. Comme précédemment une couche adhésive peut être prévue sur la face arrière des micromodules 10, 20. Alternativement, les logements pourvus chacun d'une fente d'introduction peuvent être prévus dans le support 271.

### Exemples de réalisation de modules fonctionnels sur d'autres supports

Les exemples de réalisation de modules fonctionnels décrits ci-dessus permettent de proposer à court terme et moyennant un investissement industriel modeste des modules NFC utilisables avec les téléphones mobiles conventionnels et permettant de mettre en oeuvre diverses applications NFC. Toutefois, le concept de l'invention n'est pas limité à ces exemples. Moyennant une modification peu significative des téléphones mobiles, un module fonctionnel 100, 200 selon l'invention du type représenté sur les figures 5, 6 peut être intégré à court terme dans un téléphone mobile en utilisant le boîtier du téléphone comme support à la place du support de type carte précédemment décrit.

### Exemple d'intégration dans un téléphone portable

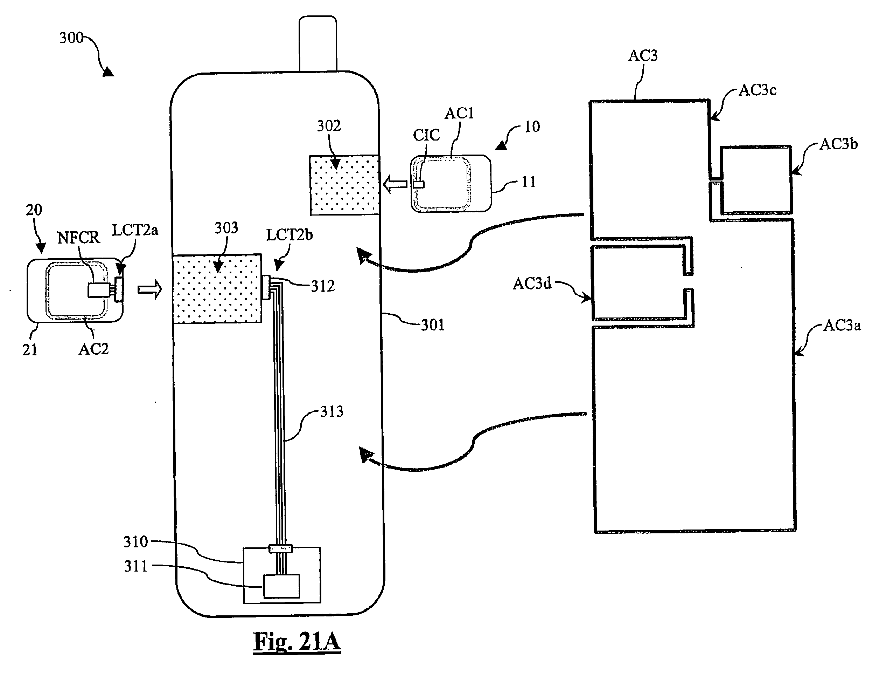

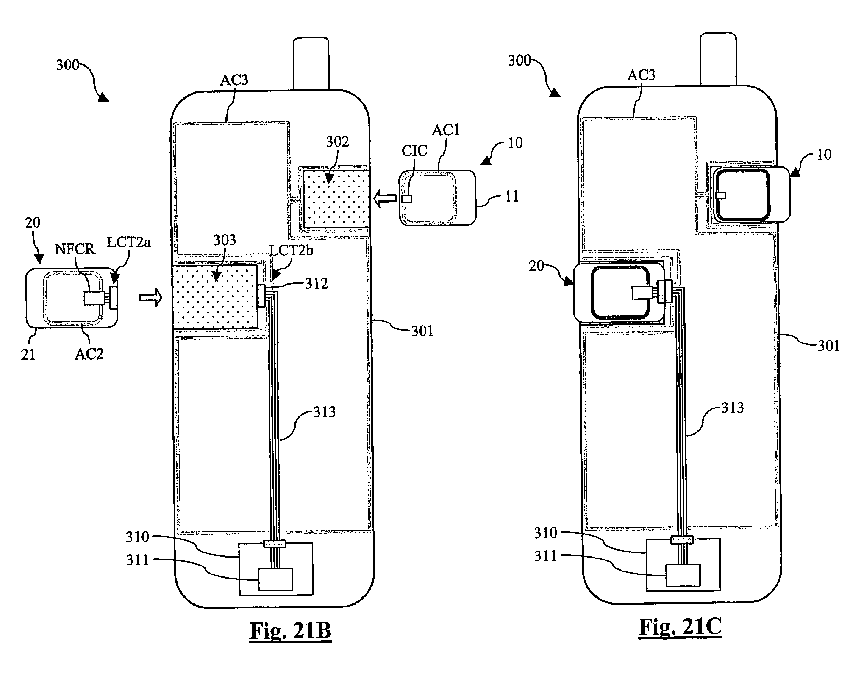

Les figures 21A, 21B, 21C représentent un module fonctionnel 300 selon l'invention dans lequel le support 301 du composant NFCR et du circuit intégré sans contact CIC est le boîtier d'un téléphone mobile (ou une partie du boîtier, notamment le châssis du téléphone). Le module est représenté par une vue éclatée sur la figure 21A, partiellement assemblé sur la figure 21B et assemblé sur la figure 21C.

Le support 301 comprend deux logements à fente 302, 303 pour recevoir respectivement le micromodule 10 décrit plus haut (comprenant le circuit intégré sans contact CIC, la bobine d'antenne AC1 et le support 11) et le micromodule 20 également décrit plus haut (comprenant le composant NFCR, la bobine d'antenne AC2, et le support 21). Le module 300 comprend également la bobine d'antenne AC3, utilisée ici pour assurer un bon taux de couplage entre les bobines d'antenne AC1, AC2 et pour augmenter la distance de communication du circuit intégré sans contact CIC.

La bobine d'antenne AC3 comprend des boucles en série qui entourent respectivement le logement 302 et le logement 303. Le nombre minimal de boucles dépend de l'agencement des logements 302, 303 dans le boîtier support 301. Les logements étant ici agencés sur des bords opposés du boîtier support 301, la bobine d'antenne AC3 comprend ici quatre boucles AC3a, AC3b, AC3c, AC3d en série, coplanaires ou non (le boîtier du téléphone étant un support épais n'imposant pas que les boucles soient coplanaires comme cela est le cas avec un support de type carte). La boucle AC3a s'étend à la périphérie intérieure d'une partie du téléphone ne comprenant pas les logements 302, 303 (partie inférieure). La boucle AC3b entoure le logement 302 recevant le micromodule 10 et la bobine d'antenne AC1. La boucle AC3c s'étend à la périphérie intérieure d'une partie du téléphone ne comprenant pas les logements 302, 303 (partie supérieure) et la boucle AC3c entoure le logement 303 recevant le micromodule 20 et la bobine d'antenne AC2.

Le composant NFCR étant inséré ici à proximité de la carte mère 310 du téléphone, qui comporte le processeur central 311 du téléphone, le circuit de liaison non filaire LCT1 a été remplacé ici par un circuit de liaison filaire LCT2. Le circuit de liaison LCT2 comprend une première partie LCT2a montée sur le micromodule, par exemple un connecteur femelle ou mâle relié à des entrées/sorties du module NFCR, et une seconde partie LCT2b comprenant un connecteur mâle ou femelle 312 et des fils électriques 313 reliant le connecteur 312 au processeur central 311. Avantageusement, le connecteur LCT2a sur le micromodule 20 peut être un connecteur compatible avec les connecteurs standards utilisés pour insérer des cartes mémoire dans les téléphones mobiles, par exemple un connecteur de carte SD, et le micromodule 20 peut être de forme compatible avec les fentes d'insertion de cartes mémoire. Dans ce cas, une fente d'insertion standard de carte mémoire peut être utilisée pour insérer le micromodule 20 dans le téléphone portable.

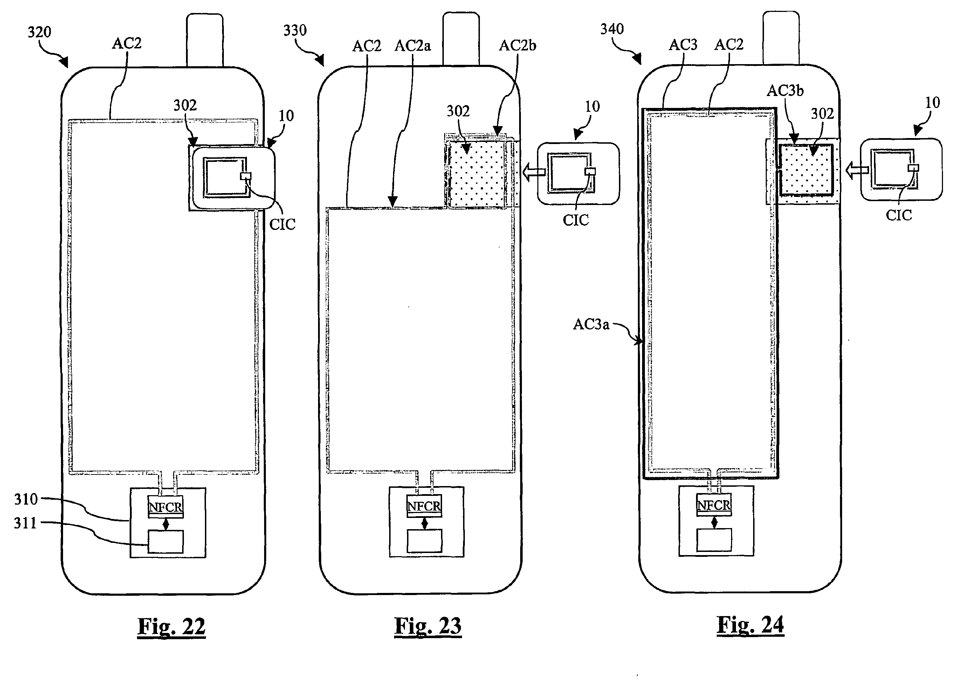

La figure 22 représente un module 320 réalisable industriellement à moyen terme, qui diffère du module 300 en ce que le composant NFCR est directement monté sur la carte mère 310 et est relié au processeur central 311 de façon conventionnelle, par exemple au moyen d'une interface UART (circuit de liaison asynchrone universel). Le module 320 ne comprend pas la bobine d'antenne AC3. La bobine d'antenne AC2 parcourt la périphérie intérieure du boîtier du téléphone et entoure le logement 302 qui reçoit le micromodule 10. Ainsi, la bobine d'antenne AC1 et la bobine d'antenne AC2 sont couplées.

La figure 23 représente un module 330 qui diffère du module 320 en ce que la bobine d'antenne AC2 comprend deux boucles AC2a, AC2b en série. La boucle AC2a parcourt la périphérie intérieure d'une partie du boîtier du téléphone et la boucle AC2b entoure le logement 302 recevant le micromodule 10.

La figure 24 représente un module 340 qui diffère du module 330 en que la bobine d'antenne AC3 est utilisée pour coupler les bobines d'antenne AC1, AC2 qui ne sont pas concentriques. La bobine AC3 comprend une boucle AC3a qui entoure la bobine d'antenne AC2 et une boucle AC3b qui entoure la bobine d'antenne AC1.

Dans les modes de réalisation représentés sur les figures 21A à 21C, 22 à 24, le micromodule 10 comprenant le circuit intégré CIC peut également être un micromodule autocollant collé sur une face externe du boîtier du téléphone.

### Exemples d'intégration dans une oreillette Bluetooth^{®}

La présente invention n'est pas limitée à une application aux téléphones mobiles, qui a seulement été citée dans ce qui précède en tant qu'exemple principal d'application du fait que le marché des téléphones mobiles représente le créneau porteur de la technologie NFC. De façon générale, un module fonctionnel selon l'invention peut être intégré dans tout type de dispositif portable électronique et notamment dans un PDA (assistant personnel), dans une console de jeu, dans un ordinateur personnel, dans un lecteur audio ou vidéo portable, etc.

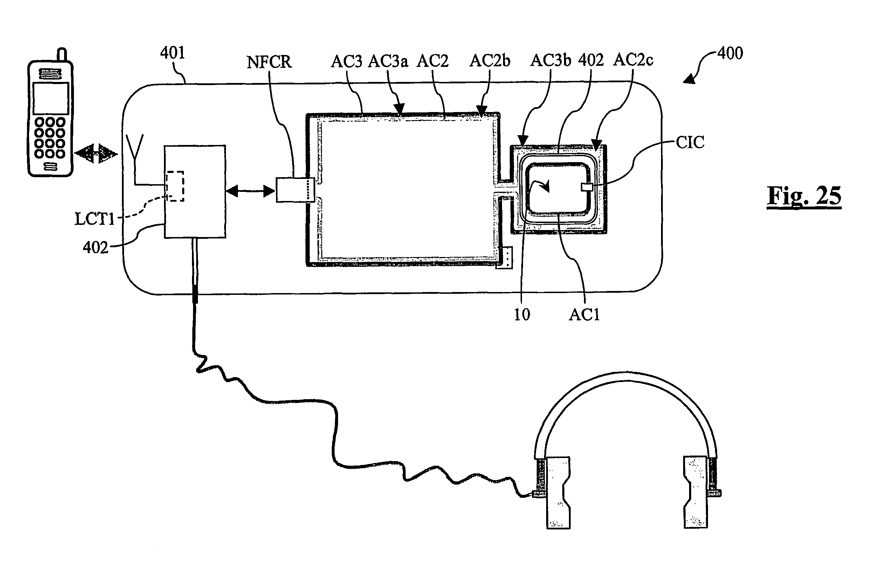

La figure 25 illustre un module 400 selon l'invention qui est intégré dans le boîtier 401 d'une oreillette Bluetooth^{®} utilisé comme support du module. Dans l'exemple représenté le composant NFCR est connecté directement au processeur audio 402 de l'oreillette, par exemple au moyen d'une interface UART. Le processeur audio 402 contrôle un microphone et un transducteur audio ou écouteur (intégré dans l'oreillette ou, comme représenté, prenant la forme d'un casque connecté à l'oreillette). Le processeur audio 402 est équipé d'un circuit de liaison Bluetooth^{®} LCT1. Ce circuit de liaison LCT1 est utilisé par le composant NFC2 pour communiquer avec un téléphone portable auquel l'oreillette est rattachée, de sorte qu'il n'est pas nécessaire de prévoir un circuit de liaison spécifique dans le composant NFCR.

L'agencement du composant NFCR, du circuit intégré sans contact CIC et des bobines d'antenne AC1, AC2, AC3 est identique à celui représenté sur la figure 19 (module 206) et ne sera pas décrit de nouveau. Tout autre agencement précédemment décrit de ces éléments peut également être retenu. Notamment le micromodule 10 comprenant le circuit intégré sans contact CIC peut être agencé dans un logement à fente ou un logement à trappe de l'oreillette. Le composant NFCR peut également être intégré sur le micromodule 20 représenté sur la figure 21A et être inséré dans un logement à fente équipé d'un connecteur pour le relier au processeur audio de l'oreillette.

Dans les modes de réalisation représentés sur les figures 21A à 21C, 22 à 25, la source d'alimentation du dispositif dans lequel le module est intégré peut être utilisée pour alimenter électriquement le composant NFCR.

D'autres modes de réalisation d'un module selon l'invention peuvent utiliser la bobine AC2 du composant NFCR pour dialoguer avec un téléphone, sans utiliser une liaison Bluetooth^{®} ou autre.

Il apparaîtra clairement à l'homme de l'art qu'un module fonctionnel selon l'invention est susceptible de diverses autres variantes de réalisation. Un module selon l'invention peut par exemple comprendre deux circuits intégrés sans contact CIC et CIC' (voire plus), un premier circuit intégré sans contact CIC étant par exemple dédié aux applications non sécurisées et un circuit intégré sans contact CIC' étant sécurisé et dédié aux applications sécurisées. Plusieurs bobines d'antenne supplémentaires peuvent être prévues, par exemple la bobine d'antenne AC3 pour augmenter la distance de communication du circuit intégré sans contact CIC, une bobine d'antenne AC4 pour augmenter la distance de communication du composant NFCR (notamment dans le mode émulation de carte), une bobine d'antenne AC5 pour augmenter le taux de couplage entre les bobines d'antenne AC1 et AC2.

### Exemples d'utilisations d'un module fonctionnel selon l'invention

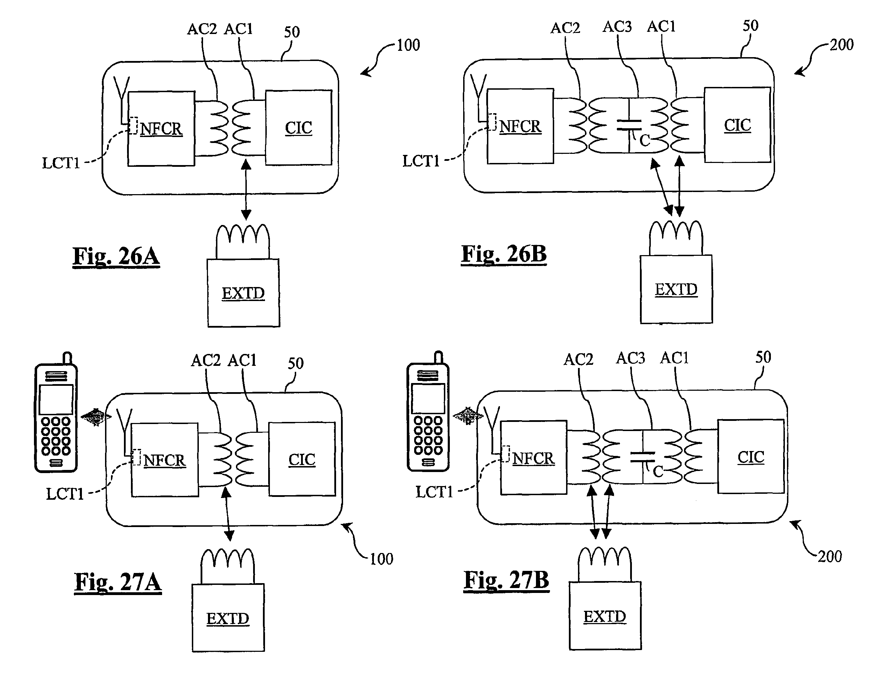

Les figures 26A, 27A, 28A, 29A illustrent diverses applications du module 100 selon l'invention. Les figures 26B, 27B, 28B, 29B illustrent les mêmes applications en utilisant le module 200 équipé de la bobine d'antenne AC3. Les exemples d'application utilisant le module 200 sont identiques à ceux utilisant le module 100 et se distinguent simplement de ceux-ci par le fait que la bobine d'antenne AC3 intervient comme élément amplificateur passif pour augmenter la distance de communication lorsqu'un transfert de données avec un dispositif extérieur EXTD est effectué.

Figures 26A, 26B : la mémoire du circuit intégré sans contact CIC est lue ou est écrite par le dispositif externe EXTD. Ce dernier peut être un lecteur RFID ou un composant NFC dans le mode actif. Exemples : transaction sécurisée, paiement, transfert de données, lecture ou écriture d'un fichier audio ou vidéo, chargement d'un programme, etc. Dans ce mode de fonctionnement, le module 100 ou 200 n'a pas besoin de tension d'alimentation, le circuit intégré CIC étant passif.

Figures 27A, 27B : des données sont envoyées par le composant NFCR à un dispositif externe EXTD ou des données sont envoyées par le dispositif externe EXTD au composant NFCR. Si le composant NFCR est dans le mode émulation de carte (si ce mode de fonctionnement est prévu) le dispositif EXTD peut être un lecteur RFID ou un composant NFC dans le mode actif. Si le composant NFCR est dans le mode actif, le dispositif EXTD peut être un circuit intégré sans contact externe ou un composant NFC externe se trouvant dans le mode émulation. Dans ce cas, une séquence anticollision peut être conduite pour écarter le circuit intégré CIC de la communication avec le dispositif externe et le placer dans l'état désélectionné. Exemples : lecture ou écriture d'un fichier audio ou vidéo, transfert de données, chargement d'un programme, etc.

Si une liaison de données est simultanément établie entre le composant NFCR et un téléphone mobile (ou tout autre dispositif maître) via le circuit de liaison LCT1 (le circuit de liaison filaire LCT2 décrit plus haut pouvant également être utilisé), les données reçues peuvent être immédiatement transmises au téléphone. De même, les données transmises au dispositif externe EXTD peuvent être fournies par le téléphone.

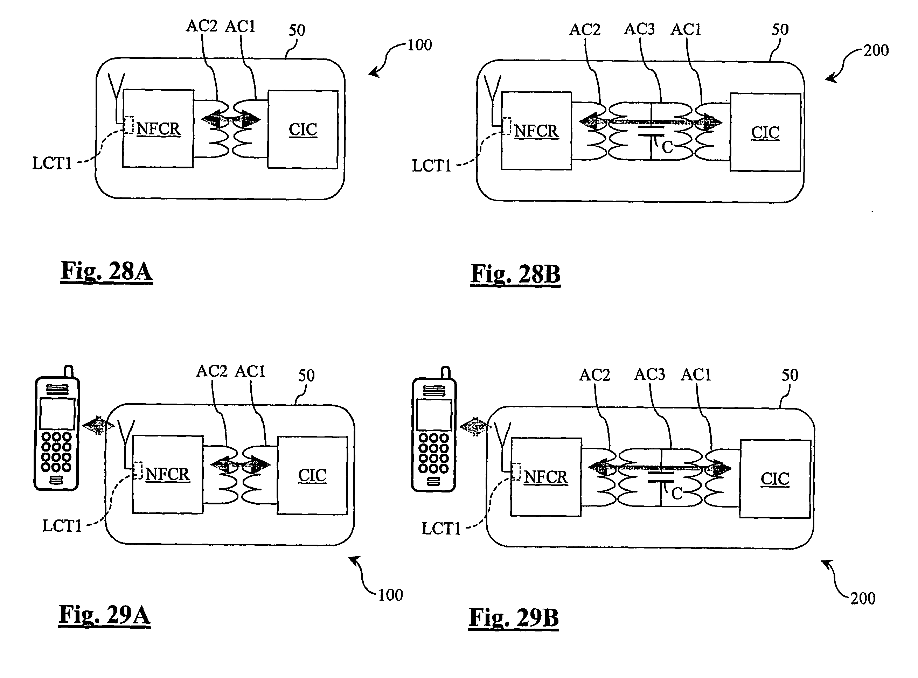

Figures 28A, 28B : la mémoire du circuit intégré sans contact CIC est lue ou est écrite par le composant NFCR, qui se trouve dans le mode actif. Exemples : lecture de données reçues par le circuit CIC au cours d'une transaction telle qu'illustrée sur les figures 26A, 26B, transfert de données ou de programmes dans le circuit intégré sans contact CIC, etc.

Figure 29A, 29B : la mémoire du circuit intégré sans contact CIC est lue ou est écrite par le composant NFCR, qui se trouve dans le mode actif, pendant qu'une liaison de données est établie entre le composant NFCR et un téléphone mobile (ou tout autre dispositif maître) via le circuit de liaison LCT1 (le circuit de liaison filaire LCT2 pouvant également être utilisé). Exemples : lecture de données reçues par le circuit CIC au cours d'une transaction illustrée sur les figures 26A, 26B et transfert de ces données au téléphone mobile, transfert dans le circuit intégré sans contact CIC de données ou de programmes fournis par le téléphone, etc.

Ces exemples illustrent sommairement les nombreuses configurations et modes de fonctionnement pouvant être mis en oeuvre au moyen d'un module fonctionnel selon l'invention. Afin de gérer ces applications, il peut être prévu de placer le module dans un mode de fonctionnement déterminé au moyen de commandes envoyées par le dispositif maître via le circuit de liaison LCT1 ou LCT2. Des commandes spécifiques se rapportant à des actions spécifiques à réaliser peuvent également être prévues. Ainsi divers modes de fonctionnement du composant NFCR et divers types de commandes peuvent être prévus, par exemple :
- se placer dans le mode actif et rechercher des dispositifs externes passifs contenant des données à lire, mémoriser les données lues dans ces dispositifs,
- se placer dans le mode actif et rechercher des dispositifs externes passifs contenant des programmes de transaction, exécuter les transactions,
- se placer dans le mode actif et rechercher des dispositifs externes passifs contenant des données à lire, transférer immédiatement au dispositif maître les données lues dans ces dispositifs,
- se placer dans le mode actif et rechercher des dispositifs externes passifs contenant des données audio et/ou vidéo, mémoriser ces données tout en les transférant à un processeur audio et/ou vidéo,
- se placer dans le mode émulation de carte et répondre à des dispositifs externes actifs voulant communiquer avec le composant NFCR, engager telle ou telle transaction autorisée,
- se placer dans le mode émulation de carte et répondre à des dispositifs externes actifs voulant transférer des données, transférer immédiatement au dispositif maître les données reçues de ces dispositifs,
- lire cycliquement des données reçues par le circuit intégré sans contact CIC et les mémoriser,
- lire cycliquement des données reçues par le circuit intégré sans contact CIC et les transférer au dispositif maître,
- lire cycliquement des données reçues par le circuit intégré sans contact CIC et les transférer immédiatement à un processeur audio et/ou vidéo,
- vider la mémoire de données ou un secteur applicatif de la mémoire de données et la transférer dans le dispositif maître,
- vider la mémoire de données ou un secteur applicatif de la mémoire de données et écrire les données concernées dans le circuit intégré sans contact CIC,
- recevoir des données du dispositif maître et les écrire dans le circuit intégré sans contact CIC, etc.

## Revendications

1. Procédé de stockage et d'échange de données sans contact, comprenant une étape consistant à réaliser un module fonctionnel (100, 100', 110, 120, 130, 140, 200, 210, 220, 230, 240, 250, 260, 270, 300, 320, 330, 340, 400) formant un support de données apte à émettre ou recevoir des données par couplage inductif,
**caractérisé en ce que** l'étape de réalisation du module fonctionnel comprenant les étapes consistant à :
- réunir sur un support portable commun (50, 111, 121, 131, 141, 211, 221, 231, 241, 251, 261, 271, 301, 401) au moins un circuit intégré sans contact passif (CIC) alimenté électriquement par couplage inductif sous la forme d'une première puce de semi-conducteur, et un lecteur (NFCR) de circuit intégré sans contact sous la forme d'une seconde puce de semi-conducteur,
- connecter le circuit intégré (CIC) à une première bobine d'antenne (AC1),
- connecter le lecteur (NFCR) à une seconde bobine d'antenne (AC2), pour que le lecteur puisse émettre un champ magnétique, et
- coupler la bobine d'antenne (AC1) du circuit intégré (CIC) et la bobine d'antenne (AC2) du lecteur (NFCR), de manière que le lecteur et le circuit intégré puissent échanger des données, et **en ce qu'**il comprend :
- un étape d'échange de données entre circuit intégré sans contact (CIC) et un dispositif externe (EXTD), par l'intermédiaire de la première bobine d'antenne (AC1), et
- une étape d'échange de données entre circuit intégré sans contact (CIC) et le lecteur (NFCR), par l'intermédiaire des première (AC1) et seconde (AC2) bobine d'antenne.

2. Procédé selon la revendication 1, comprenant une étape consistant à prévoir au moins une bobine d'antenne supplémentaire (AC3) pour assurer au moins l'une des fonctions suivantes :
- augmenter la distance de communication du circuit intégré sans contact,
- coupler la bobine d'antenne (AC1) du circuit intégré sans contact et la bobine d'antenne (AC2) du lecteur,
- augmenter le taux de couplage entre la bobine d'antenne (AC1) du circuit intégré sans contact et la bobine d'antenne (AC2) du lecteur.

3. Procédé selon l'une des revendications 1 et 2, comprenant les étapes consistant à :
- prévoir dans le module fonctionnel un circuit de liaison (LCT1, LCT2, LCT2a, LCT2b) connecté au lecteur (NFCR), et
- échanger des données entre le lecteur (NFCR) et un dispositif maître (15) au moyen du circuit de liaison.

4. Procédé selon la revendication 3, comprenant une étape consistant à configurer le lecteur (NFCR) pour qu'il exécute les commandes suivantes envoyées par un dispositif maître :
- une commande de lecture ou d'écriture du circuit intégré sans contact,
- une commande de lecture ou d'écriture d'un dispositif externe au module fonctionnel,
- une commande de transfert au dispositif maître (15) de données fournies par le circuit intégré sans contact, et
- une commande de transfert au dispositif maître (15) de données fournies par le dispositif externe.

5. Procédé selon l'une des revendications 3 et 4, comprenant une étape consistant à prévoir comme circuit de liaison (LCT1) un circuit d'interface Bluetooth®.

6. Procédé selon l'une des revendications 3 à 5, comprenant les étapes consistant à :
- écrire des données dans le circuit intégré sans contact, par couplage inductif, au moyen d'un dispositif externe (EXTD),
- lire les données écrites dans le circuit intégré sans contact au moyen du lecteur (NFCR), et
- transférer dans un dispositif maître (15), via le circuit de liaison, les données lues dans le circuit intégré sans contact au moyen du lecteur (NFCR).

7. Procédé selon l'une des revendications 3 à 6, comprenant les étapes consistant à :
- écrire des données dans le lecteur (NFCR), via le circuit de liaison,
- écrire les données dans le circuit intégré sans contact (CIC), par couplage inductif, au moyen du lecteur (NFCR), et
- lire les données écrites dans le circuit intégré sans contact au moyen d'un dispositif externe (EXTD), et mémoriser les données dans le dispositif externe.

8. Système de stockage et d'échange de données comprenant un module fonctionnel (100, 100', 110, 120, 130, 140, 200, 210, 220, 230, 240, 250, 260, 270, 300, 320, 330, 340, 400) formant un support de données apte à émettre ou recevoir des données par couplage inductif, **caractérisé en ce que** le module fonctionnel comprend :
- un support portable commun (50, 111, 121, 131, 141, 211, 221, 231, 241, 251, 261, 271, 301, 401) sur lequel ou dans lequel sont réunis au moins un circuit intégré sans contact passif (CIC) alimenté électriquement par couplage inductif sous la forme d'une première puce de semi-conducteur, et un lecteur (NFCR) de circuit intégré sans contact sous la forme d'une seconde puce de semi-conducteur,
- une première bobine d'antenne (AC1) connectée au circuit intégré (CIC),
- une seconde bobine d'antenne (AC2) connectée au lecteur (NFCR), pour que le lecteur puisse émettre un champ magnétique,
la première bobine d'antenne (AC1) étant couplée à la seconde bobine d'antenne (AC2), de manière que le lecteur et le circuit intégré puissent échanger des données,
et dans lequel le circuit intégré sans contact (CIC) est configuré pour échanger des données avec un dispositif externe (EXTD) par l'intermédiaire de la première bobine d'antenne (AC1) et échanger des données avec le lecteur (NFCR) par l'intermédiaire des première (AC1) et seconde (AC2) bobine d'antenne.

9. Système selon la revendication 8 dans lequel le module fonctionnel comprend une bobine d'antenne supplémentaire (AC3) assurant au moins l'une des fonctions suivantes :
- augmenter la distance de communication du circuit intégré sans contact,
- coupler la bobine d'antenne (AC1) du circuit intégré sans contact et la bobine d'antenne (AC2) du lecteur,
- augmenter le taux de couplage entre la bobine d'antenne (AC1) du circuit intégré sans contact et la bobine d'antenne (AC2) du lecteur.

10. Système selon l'une des revendications 8 et 9, comprenant :
- un circuit de liaison (LCT1, LCT2, LCT2a, LCT2b) connecté au lecteur (NFCR), et
- un dispositif maître (15) pour échanger des données avec le lecteur (NFCR), via le circuit de liaison.

11. Système selon la revendication 10, dans lequel le lecteur (NFCR) est configuré pour exécuter les commandes suivantes envoyées par le dispositif maître :
- une commande de lecture ou d'écriture du circuit intégré sans contact,
- une commande de lecture ou d'écriture d'un dispositif externe (EXTD),
- une commande de transfert au dispositif maître (15) de données fournies par le circuit intégré sans contact, et
- une commande de transfert au dispositif maître (15) de données fournies par le dispositif externe.

12. Système selon l'une des revendications 10 et 11, dans lequel le dispositif maître (15) est choisi parmi le groupe d'appareils comprenant les téléphones mobiles, les PDA, les consoles de jeu, les lecteurs audio ou vidéo portables et les ordinateurs personnels.

13. Système selon l'une des revendications 10 à 12, dans lequel le circuit de liaison (LCT1) comprend un circuit d'interface Bluetooth®.

14. Système selon l'une des revendications 8 à 13, dans lequel le lecteur (NFCR) et/ou le circuit intégré sans contact (CIC) est monté sur ou dans le support portable au moyen d'un support intermédiaire (10, 11, 20, 21).

15. Système selon l'une des revendications 8 à 14, dans lequel le module fonctionnel est intégré dans un écouteur d'oreille (400) de téléphone mobile, le lecteur (NFCR) étant relié à un processeur (402) de l'écouteur d'oreille, de manière à pouvoir retransmettre via le processeur des fichiers reçus par couplage inductif par le lecteur (NFCR) ou par le circuit intégré sans contact (CIC).

## Claims

1. Method for storing and exchanging contactless data, comprising a step of making a functional module (100, 100', 110, 120, 130, 140, 200, 210, 220, 230, 240, 250, 260, 270, 300, 320, 330, 340, 400) forming a data support able to send or receive data by inductive coupling,
**characterized in that** the step of making the functional module comprises the steps of:
- gathering on a common portable support (50, 111, 121, 131, 141, 211, 221, 231, 241, 251, 261, 271, 301, 401) at least one passive contactless integrated circuit (CIC) electrically powered by inductive coupling in the form of a first semi-conductor chip, and a contactless integrated circuit reader (NFCR) in the form of a second semi-conductor chip,
- connecting the integrated circuit (CIC) to a first antenna coil (AC1),
- connecting the reader (NFCR) to a second antenna coil (AC2), so that the reader can emit a magnetic field, and
- coupling the antenna coil (AC1) of the integrated circuit (CIC) and the antenna coil (AC2) of the reader (NFCR), so that the reader and the integrated circuit can exchange data,
and **in that** it comprises:
- exchanging data between the contactless integrated circuit (CIC) and an external device (EXTD), by means of the first antenna coil (AC1), and
- exchanging data between the contactless integrated circuit (CIC) and the reader (NFCR), by means of the first (AC1) and second (AC2) antenna coils.

2. A method according to claim 1, comprising providing in the contactless module at least one additional antenna coil (AC3) to perform at least one of the following functions:
- increase the communication distance of the contactless integrated circuit,
- couple the antenna coil (AC1) of the contactless integrated circuit and the antenna coil (AC2) of the reader,
- increase the coupling rate between the antenna coil (AC1) of the contactless integrated circuit and the antenna coil (AC2) of the reader.

3. Method according to one of claims 1 and 2, comprising the steps of:
- providing, in the functional module, a link circuit (LCT1, LCT2, LCT2a, LCT2b) connected to the reader (NFCR), and
- exchanging data between the reader (NFCR) and a master device (15) by means of the link circuit.

4. Method according to claim 3, comprising a step of configuring the reader (NFCR) so that it executes the following commands sent by a master device:
- a command of reading or writing the contactless integrated circuit,
- a command of reading or writing a device external to the functional module,
- a command of transferring data supplied by the contactless integrated circuit to the master device (15), and
- a command of transferring data supplied by the external device to the master device (15).

5. Method according to one of claims 3 and 4, comprising a step of providing a Bluetooth^{®} interface circuit as link circuit (LCT1).

6. Method according to one of claims 3 to 5, comprising the steps of:
- writing data in the contactless integrated circuit, by inductive coupling, by means of an external device (EXTD),
- reading the data written in the contactless integrated circuit by means of the reader (NFCR), and
- transferring to a master device (15), via the link circuit, the data read in the contactless integrated circuit by means of the reader (NFCR).

7. Method according to one of claims 3 to 6, comprising the steps of:
- writing data in the reader (NFCR), via the link circuit,
- writing the data in the contactless integrated circuit (CIC), by inductive coupling, by means of the reader (NFCR), and
- reading the data written in the contactless integrated circuit by means of an external device, and storing the data in the external device (EXTD).

8. System for storing and exchanging data comprising a functional module (100, 100', 110, 120, 130, 140, 200, 210, 220, 230, 240, 250, 260, 270, 300, 320, 330, 340, 400) forming a data support able to send or receive data by inductive coupling,
**characterized in that** the functional module comprises:
- a common portable support (50, 111, 121, 131, 141, 211, 221, 231, 241, 251, 261, 271, 301, 401) on which or in which are gathered at least one passive contactless integrated circuit (CIC) electrically powered by inductive coupling in the form of a first semi-conductor chip, and a contactless integrated circuit reader (NFCR) in the form of a second semi-conductor chip,
- a first antenna coil (AC1) connected to the integrated circuit (CIC),
- a second antenna coil (AC2) connected to the reader (NFCR), so that the reader can emit a magnetic field,
the first antenna coil (AC1) being coupled to the second antenna coil (AC2), so that the reader and the integrated circuit can exchange data, and
wherein the contactless integrated circuit (CIC) is configured to exchange data with an external device (EXTD) by means of the first antenna coil (AC1) and to exchange data with the reader (NFCR) by means of the first (AC1) and second (AC2) antenna coils.

9. System according to claim 8, wherein the functional module comprises an additional antenna coil (AC3) ensuring at least one of the following functions:
- increase the communication distance of the contactless integrated circuit,
- couple the antenna coil (AC1) of the contactless integrated circuit and the antenna coil (AC2) of the reader,
- increase the coupling rate between the antenna coil (AC1) of the contactless integrated circuit and the antenna coil (AC2) of the reader.

10. System according to one of claims 8 and 9, comprising:
- a link circuit (LCT1, LCT2, LCT2a, LCT2b) connected to the reader (NFCR), and
- a master device (15) for exchanging data with the reader (NFCR), via the link circuit.

11. System according to claim 10, wherein the reader (NFCR) is configured to execute the following commands sent by the master device:
- a command of reading or writing the contactless integrated circuit,
- a command of reading or writing an external device (EXTD),
- a command of transferring data supplied by the contactless integrated circuit to the master device (15), and
- a command of transferring data supplied by the external device to the master device (15).

12. System according to one of claims 10 and 11, wherein the master device (15) is chosen among the group of devices comprising mobile phones, PDAs, game consoles, portable audio or video players and personal computers.

13. System according to one of claims 10 to 12, wherein the link circuit (LCT1) comprises a Bluetooth^{®} interface circuit.

14. System according to one of claims 8 to 13, wherein the reader (NFCR) and/or the contactless integrated circuit (CIC) is mounted on or in the portable support by means of an intermediate support (10, 11, 20, 21).

15. System according to one of claims 8 to 14, wherein the functional module is integrated into an earphone (400) of a mobile phone, the reader (NFCR) being linked to a processor (402) of the earphone, in order to be able to retransmit, via the processor, files received by inductive coupling by the reader (NFCR) or by the contactless integrated circuit (CIC).

## Patentansprüche

1. Verfahren zur kontaktlosen Datenspeicherung und zum kontaktlosen Datenaustausch, umfassend einen Schritt, der darin besteht, ein Funktionsmodul (100, 100', 110, 120, 130, 140, 200, 210, 220, 230, 240, 250, 260, 270, 300, 320, 330, 340, 400), das einen für das Aussenden oder Empfangen von Daten durch induktive Kopplung geeigneten Datenträger bildet,
**dadurch gekennzeichnet, dass** der Schritt der Ausführung des Funktionsmoduls die Schritte umfasst, die darin bestehen:
- mindestens eine elektrisch durch induktive Kopplung gespeiste, passive kontaktlose integrierte Schaltung (CIC) in der Form eines ersten Halbleiterchips, und ein Lesegerät (NFCR) von kontaktloser integrierter Schaltung in der Form eines zweiten Halbleiterchips auf einem gemeinsamen tragbaren Träger (50, 111, 121, 131, 141, 211, 221, 231, 241, 251, 261, 271, 301, 401) zusammenzustellen,
- die integrierte Schaltung (CIC) mit einer ersten Antennenspule (AC1) zu verbinden,
- das Lesegerät (NFCR) mit einer zweiten Antennenspule (AC2) so zu verbinden, dass es ein Magnetfeld aussenden kann, und
- die Antennenspule (AC1) der integrierten Schaltung (CIC) und die Antennenspule (AC2) des Lesegeräts (NFCR) so anzukoppeln, dass das Lesegerät und die integrierte Schaltung Daten austauschen können, und dass es folgende Schritte umfasst:
- einen Schritt des Austauschs von Daten zwischen der kontaktlosen integrierten Schaltung (CIC) und einer externen Vorrichtung (EXTD) über die erste Antennenspule (AC1), und
- einen Schritt des Austauschs von Daten zwischen der kontaktlosen integrierten Schaltung (CIC) und dem Lesegerät (NFCR) über die erste (AC1) und die zweite (AC2) Antennenspule.

2. Verfahren nach Anspruch 1, umfassend einen Schritt, der darin besteht, mindestens eine zusätzliche Antennenspule (AC3) vorzusehen, um mindestens eine der folgenden Funktionen auszuführen:
- Erhöhen der Kommunikationsreichweite der kontaktlosen integrierten Schaltung,
- Ankoppeln der Antennenspule (AC1) der kontaktlosen integrierten Schaltung und der Antennenspule (AC2) des Lesegeräts,
- Erhöhen der Kopplungsrate zwischen der Antennenspule (AC1) der kontaktlosen integrierten Schaltung und der Antennenspule (AC2) des Lesegeräts.

3. Verfahren nach einem der Ansprüche 1 und 2, umfassend die Schritte, die darin bestehen:
- eine mit dem Lesegerät (NFCR) verbundene Verbindungsschaltung (LCT1, LCT2, LCT2a, LCT2b) im Funktionsmodul vorzusehen, und
- Daten zwischen dem Lesegerät (NFCR) und einer Master-Vorrichtung (15) mittels der Verbindungsschaltung auszutauschen.

4. Verfahren nach Anspruch 3, umfassend einen Schritt, der darin besteht, das Lesegerät (NFCR) so zu konfigurieren, dass es die folgenden durch eine Master-Vorrichtung entsandten Anweisungen ausführt:
- eine Anweisung zum Lesen oder Schreiben der kontaktlosen integrierten Schaltung ,
- eine Anweisung zum Lesen oder Schreiben einer dem Funktionsmodul externen Vorrichtung ,
- eine Anweisung zum Übertragen von durch die kontaktlose integrierte Schaltung gelieferten Daten auf die Master-Vorrichtung (15), und
- eine Anweisung zum Übertragen von durch die externe Vorrichtung gelieferten Daten auf die Master-Vorrichtung (15).

5. Verfahren nach einem der Ansprüche 3 und 4, umfassend einen Schritt, der darin besteht, eine Schnittstellenschaltung Bluetooth^{®} als Verbindungsschaltung (LCT1) vorzusehen.

6. Verfahren nach einem der Ansprüche 3 bis 5, umfassend die Schritte, die darin bestehen:
- Daten mittels einer externen Vorrichtung (EXTD) in die kontaktlose integrierte Schaltung durch induktive Kopplung zu schreiben,
- die in der kontaktlosen integrierten Schaltung geschriebenen Daten mittels des Lesegeräts (NFCR) zu lesen, und
- die in der kontaktlosen integrierten Schaltung mittels des Lesegeräts (NFCR) gelesenen Daten über die Verbindungsschaltung in eine Master-Vorrichtung (15) zu übertragen.

7. Verfahren nach einem der Ansprüche 3 bis 6, umfassend die Schritte, die darin bestehen:
- Daten in das Lesegerät (NFCR) über die Verbindungsschaltung zu schreiben,
- die Daten mittels des Lesegeräts (NFCR) in die kontaktlose integrierte Schaltung (CIC) durch induktive Kopplung zu schreiben, und
- die in der kontaktlosen integrierten Schaltung geschriebenen Daten mittels einer externen Vorrichtung (EXTD) zu lesen, und die Daten in die externe Vorrichtung zu speichern.

8. System zur Datenspeicherung und zum Datenaustausch, umfassend ein Funktionsmodul (100, 100', 110, 120, 130, 140, 200, 210, 220, 230, 240, 250, 260, 270, 300, 320, 330, 340, 400), das einen für das Aussenden oder Empfangen von Daten durch induktive Kopplung geeigneten Datenträger bildet, **dadurch gekennzeichnet, dass** das Funktionsmodul folgendes umfasst:
- einen gemeinsamen tragbaren Träger (50, 111, 121, 131, 141, 211, 221, 231, 241, 251, 261, 271, 301, 401) auf dem oder in dem mindestens eine elektrisch durch induktive Kopplung gespeiste, passive kontaktlose integrierte Schaltung (CIC) in der Form eines ersten Halbleiterchips, und ein Lesegerät (NFCR) von kontaktloser integrierter Schaltung in der Form eines zweiten Halbleiterchips, zusammengestellt sind,
- eine erste Antennenspule (AC1), die mit der integrierten Schaltung (CIC) verbunden ist,
- eine zweite Antennenspule (AC2), die mit dem Lesegerät (NFCR) so verbunden ist, dass das Lesegerät ein Magnetfeld aussenden kann,
wobei die erste Antennenspule (AC1) mit der zweiten Antennenspule (AC2) so angekoppelt ist, dass das Lesegerät und die integrierte Schaltung Daten austauschen können,
und bei dem die kontaktlose integrierte Schaltung (CIC) so konfiguriert ist, dass sie Daten mit einer externen Vorrichtung (EXTD) über die erste Antennenspule (AC1) austauscht und Daten mit dem Lesegerät (NFCR) über die erste (AC1) und die zweite (AC2) Antennenspule austauscht.

9. System nach Anspruch 8, bei dem das Funktionsmodul eine zusätzliche Antennenspule (AC3) umfasst, die mindestens eine der folgenden Funktionen hat:
- Erhöhen der Kommunikationsreichweite der kontaktlosen integrierten Schaltung,
- Ankoppeln der Antennenspule (AC1) der kontaktlosen integrierten Schaltung und der Antennenspule (AC2) des Lesegeräts,
- Erhöhen der Kopplungsrate zwischen der Antennenspule (AC1) der kontaktlosen integrierten Schaltung und der Antennenspule (AC2) des Lesegeräts.

10. System nach einem der Ansprüche 8 und 9, umfassend :
- eine mit dem Lesegerät (NFCR) verbundene Verbindungsschaltung (LCT1, LCT2, LCT2a, LCT2b), und
- eine Master-Vorrichtung (15) zum Austausch von Daten mit dem Lesegerät (NFCR) über die Verbindungsschaltung.

11. System nach Anspruch 10, bei dem das Lesegerät (NFCR) so konfiguriert ist, dass es die folgenden durch die Master-Vorrichtung entsandten Anweisungen ausführt:
- eine Anweisung zum Lesen oder Schreiben der kontaktlosen integrierten Schaltung,
- eine Anweisung zum Lesen oder Schreiben einer externen Vorrichtung (EXTD),
- eine Anweisung zum Übertragen von durch die kontaktlose integrierte Schaltung gelieferten Daten auf die Master-Vorrichtung (15), und
- eine Anweisung zum Übertragen von durch die externe Vorrichtung gelieferten Daten auf die Master-Vorrichtung (15).

12. System nach einem der Ansprüche 10 und 11, bei dem die Master-Vorrichtung (15) unter der Gerätegruppe bestehend aus den Mobiltelefonen, den PDA, den Spielkonsolen, den tragbaren Audio- oder Videolesegeräten und den Personalcomputern ausgewählt wird.

13. System nach einem der Ansprüche 10 bis 12, bei dem die Verbindungsschaltung (LCT1) eine Schnittstellenschaltung Bluetooth^{®} umfasst.

14. System nach einem der Ansprüche 8 bis 13, bei dem das Lesegerät (NFCR) und/oder die kontaktlose integrierte Schaltung (CIC) auf oder in dem tragbaren Träger mittels eines Zwischenträgers (10, 11, 20, 21) montiert ist.

15. System nach einem der Ansprüche 8 bis 14, bei dem das Funktionsmodul in einem Ohrhörer (400) eines Mobiltelefons integriert ist, wobei das Lesegerät (NFCR) mit einem Prozessor (402) des Ohrhörers so verbunden ist, dass es durch das Lesegerät (NFCR) oder die kontaktlose integrierte Schaltung (CIC) durch induktive Kopplung empfangene Dateien über den Prozessor weitergeben kann.
